(19) Europäisches Patentamt
European Patent Office
Office européen des brevets

(11) EP 1 425 320 B1

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(21) Anmeldenummer: **02745400.8**

(22) Anmeldetag: **21.06.2002**

(51) Int Cl.:
***C08F 220/04*** $^{(2006.01)}$ ***A61L 15/00*** $^{(2006.01)}$

(86) Internationale Anmeldenummer:
**PCT/EP2002/006877**

(87) Internationale Veröffentlichungsnummer:
**WO 2003/002623 (09.01.2003 Gazette 2003/02)**

(54) **SAURE HOCHQUELLFÄHIGE HYDROGELE**

ACIDIC HYDROGELS WHICH ARE CAPABLE OF SWELLING

HYDROGELS ACIDES A FORTE CAPACITE DE GONFLEMENT

(84) Benannte Vertragsstaaten:
**AT BE CH CY DE DK ES FI FR GB GR IE IT LI LU MC NL PT SE TR**

(30) Priorität: **28.06.2001 DE 10130671**
**30.08.2001 DE 10142138**
**27.09.2001 DE 10147713**

(43) Veröffentlichungstag der Anmeldung:
**09.06.2004 Patentblatt 2004/24**

(73) Patentinhaber: **BASF Aktiengesellschaft**
**67056 Ludwigshafen (DE)**

(72) Erfinder:
- **FUNK, Rüdiger**
**65527 Niedernhausen (DE)**
- **HERFERT, Norbert**
**Charlotte, NC 28226-7200 (US)**
- **WANIOR, Mariola**
**63526 Erlensee (DE)**
- **STÜVEN, Uwe**
**65812 Bad Soden (DE)**
- **BECK, Martin**
**67133 Maxdorf (DE)**

(56) Entgegenhaltungen:
**EP-A- 0 312 952** **DE-A- 19 529 348**
**US-E- R E32 649**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 425 320 B1

Printed by Jouve, 75001 PARIS (FR)

## Beschreibung

Die vorliegende Erfindung betrifft neuartige hydrophile quellbare Polymerisate mit verbesserter Geruchskontrolle, ein Verfahren zu ihrer Herstellung und ihre Verwendung zur Absorption wässriger Flüssigkeiten.

Insbesondere betrifft die vorliegende Erfindung saure hochquellfähige Hydrogele mit einem pH ≤ 5,7, dass heißt Hydrogele auf Basis Polyacrylsäure, deren Neutralisationsgrad bevorzugt ≤ 60 Mol-% beträgt, Verfahren zu ihrer Herstellung sowie deren Verwendung im Hygieneartikel.

Quellbare Hydrogel-bildende Polymerisate, sogenannte Superabsorber (Super-Absorbing Polymers), sind aus dem Stand der Technik bekannt. Hierbei handelt es sich um Netzwerke flexibler hydrophiler Polymerisate, die sowohl ionischer als auch nichtionischer Natur sein können. Diese sind in der Lage, wässrige Flüssigkeiten unter Bildung eines Hydrogels zu absorbieren und zu binden und werden daher bevorzugt für die Herstellung von Tampons, Windeln, Damenbinden, Inkontinenzartikeln, Trainingsunterwäsche für Kinder, Schuheinlagen und anderen Hygieneartikeln bei der Absorption von Körperflüssigkeiten verwendet. Superabsorber weren außerdem in anderen Gebieten der Technik eingesetzt, bei denen Flüssigkeiten, insbesondere Wasser oder wässrige Lösungen absorbiert werden. Diese Gebiete sind z.B. Lagerung, Verpackung, Transport (Verpackungsmaterial wassersensitiver Artikel, wie z.B. Blumentransport, Schock Protection); Lebensmittelsektor (Transport von Fisch, Frischfleisch; Absorption von Wasser, Blut in Frischfisch/-Fleisch-Verpackungen); Medizin (Wundpflaster, wasserabsorbierendes Material für Brandverbände oder für andere nässende Wunden), Kosmetik (Trägermaterial für Pharmachemikalien und Medikamente, Rheumapflaster, Ultraschallgel, Kühlgel, Kosmetikverdicker, Sonnenschutz); Verdicker für Öl/Wasser bzw. Wasser/Öl-Emulsionen; Textil (Handschuhe, Sportbekleidung, Feuchtigkeitsregulation in Textilien, Schuheinlagen); chem.-techn. Anwendungen (Katalysator für org. Reaktionen, Immobilisierung großer funktioneller Moleküle (Enzyme), Adhesiv für Agglomerationen, Wärmespeicher, Filtrationshilfsmittel, hydrophile Komponente in Polymerlaminaten, Dispergiermittel, Verflüssiger); Bau- und Konstruktionswesen, Installation (Pulverspritzguss, lehmbasierende Putze, Vibrationshemmendes Medium, Hilfsmittel bei Tunnelgrabungen in wasserreichem Untergrund, Kabelummantelung) ; Wasserbehandlung, Abfallbehandlung, Wasserabtrennung (Enteisungsmittel, wiederverwendbare Sandsäcke); Reinigung; Agrarindustrie (Bewässerung, Rückhaltung von Schmelzwasser und Tauniederschläge, Kompostierungszusatz, Schutz der Wälder vor Pilz-/Insektenbefall, verzögerte Freitsetzung von Wirkstoffen an Pflanzen); im Feuerschutz (Funkenflug) (Abdecken von Häusern bzw. Bedecken von Hauswänden mit SAP Gel, da das Wasser eine sehr hohe Wärmekapazität hat, kann ein Entflammen verhindert werden; Versprühen von SAP Gel bei Bränden wie z.B. Waldbränden); Coextrustionsmittel in thermoplastischen Polymeren (Hydrophilierung von Mehrschicht)folien; Herstellung von Folien und thermoplastischen Formkörpern, die Wasser absorbieren können (z.B. Regen- und Tauwasser speichernde Folien für die Landwirtschaft; SAP haltige Folien zum Frischhalten von Obst und Gemüse, die in feuchte, Folien verpackt werden können; der SAP speichert vom Obst und Gemüse abgegebenes Wasser ohne Bildung von Kondensationstropfen und gibt das Wasser teilweise an das Obst und Gemüse wieder ab, so daß weder Faulen noch Verwelken einritt; SAP-Polystyrol Coextrudate z.B. für Lebensmittelverpackungen wie Fleisch, Fisch, Geflügel, Obst und Gemüse); Trägersubstanz in Wirkstoffformulierungen (Pharma, Pflanzenschutz). In den Hygieneartikeln befinden sich die Superabsorber in aller Regel im sog. absorbent core, der als weitere Materialien unter anderem Fasern (Cellulosefasern) umfasst, die als eine Art Flüssigkeitsreservoir die spontan beaufschlagten Flüssigkeitsmengen zwischenspeichern und eine gute Kanalisation der Körperflüssigkeiten im absorbent core hin zum Superabsorber gewährleisten sollen.

Der aktuelle Trend im Windelaufbau besteht darin, dünnere Konstruktionen mit reduziertem Cellulosefaseranteil und erhöhtem Hydrogelanteil herzustellen. Mit dem Trend zu immer dünner werdenden Windelkonstruktionen hat sich das Anforderungsprofil an die wasserquellbaren hydrophilen Polymeren über die Jahre deutlich verändert. Während zu Beginn der Entwicklung hochsaugfähiger Hydrogele zunächst allein das sehr hohe Quellvermögen in Vordergrund stand, hat sich später gezeigt, dass auch die Fähigkeit des Superabsorbers zur Flüssigkeitsweiterleitung und -verteilung von entscheidender Bedeutung ist. Es hat sich gezeigt, dass herkömmliche Superabsorber an der Oberfläche bei Benetzung mit Flüssigkeit stark anquellen, so dass der Flüssigkeitstransport ins Partikelinnere stark erschwert oder ganz unterbunden wird. Diese Eigenart des Superabsorbers wird auch als "Gelblocking" bezeichnet. Aufgrund der höheren Beladung des Hygieneartikels (Polymer pro Flächeneinheit) darf das Polymer im gequollenen Zustand keine Sperrschicht für nachfolgende Flüssigkeit bilden. Weist das Produkt gute Transporteigenschaften auf, so kann eine optimale Ausnutzung des gesamten Hygieneartikels gewährleistet werden. Das Phänomen des Gelblockings wird somit unterbunden, das im Extremfall zum Austritt der Flüssigkeit, der sog. Leakage des Hygieneartikels führt. Die Flüssigkeitsweiterleitung und -verteilung ist also bei der anfänglichen Absorption von Körperflüssigkeiten von entscheidender Bedeutung.

Gute Transporteigenschaften besitzen beispielsweise Hydrogele, die im gequollenen Zustand eine hohe Gelfestigkeit aufweisen. Gele mit nur geringer Gelfestigkeit sind unter einem angewendetem Druck (Körperdruck) deformierbar, verstopfen Poren in dem Superabsorber / Cellulosefaser-Saugkörper und verhindern dadurch eine weitere Flüssigkeitsaufnahme. Eine erhöhte Gelfestigkeit wird in aller Regel durch eine höhere Vernetzung erreicht, wodurch allerdings die Retention des Produktes verringert wird. Eine elegante Methode zur Erhöhung der Gelfestigkeit stellt die Oberflächennachvernetzung dar. Bei diesem Verfahren werden getrocknete Superabsorber mit durchschnittlicher Vernetzungsdichte einer zusätzlichen Vernetzung unterworfen. Der Prozess ist dem Fachmann bekannt und in Patent EP-A-0 349 240 beschrieben. Durch die Oberflächennachvernetzung steigt die Vernetzungsdichte in der Schale der Superabsorberpartikel, wodurch die Absorption unter Druckbelastung auf ein höheres Niveau gehoben wird. Während die Absorptionskapazität in-der Superabsorberschale sinkt, weist-der Kern der Superabsorberpartikel durch das Vorhandensein beweglicher Polymerketten eine im Vergleich zur Schale verbesserte Absorptionskapazität auf, so dass durch den Schalenaufbau eine verbesserte Flüssigkeitsweiterleitung gewährleistet wird, ohne dass der Effekt des Gelblockings auftritt. Es ist durchaus wünschenswert, dass die Gesamtkapazität des Superabsorbers nicht spontan, sondern zeitversetzt ausgeschöpft wird. Da der Hygieneartikel in der Regel mehrmals mit Urin beaufschlagt wird, muss das Absorptionsvermögen des Superabsorbers sinnvollerweise nicht nach der ersten Disposition erschöpft sein.

Finden Hydrogele im Hygienebereich Anwendung, so werden sie Körperflüssigkeiten wie Urin oder Menstruationsblut ausgesetzt. Die Körperflüssigkeiten enthalten generell unangenehm riechende Komponenten vom Amin- oder Fettsäure-Typ, die neben den ohnehin vorhandenen organischen Komponenten (wie beispielsweise Amine, Säuren, Alkohole, Aldeyde, Ketone, Phenole, Polycyclen, Indole Aromaten, Polyaromaten usw.), die für unangenehme Körpergerüche verantwortlich sind, in Erscheinung treten. Die Geruchsentwicklung findet in zwei Stufen statt: als erstes beim Austritt aus der Körperregion, und dann, wenn die Flüssigkeit bereits eine definierte Zeit lang im Absorptionsmedium vorliegt. Beide Geruchsfaktoren gilt es zu eliminieren, da es aus Kostengründen unerwünscht ist, den Hygieneartikel nach jedem Absorptionsvorgang zu wechseln.

Bei der Geruchskontrolle auf dem Hygienesektor sind bislang folgende Möglichkeiten in der Literatur zu finden:

- Geruchskontrolle bei gleichzeitiger Absorption durch Zugabe inerter anorganischer Substanzen mit großer Oberfläche, in aller Regel als Feststoff auf die Oberfläche von Pulvern oder Granulaten zur Konfektionierung absorbierender Polymerer. Hier gelangen Zeolithe, Aktivkohle, Bentonite, feinteilige amorphe Polykieselsäuren (Silica) wie AEROSIL® oder CAB-O-SIL® zum Einsatz.

- Zugabe von Substanzen, die unter Komplexbildung mit organischen Molekülen oder mit Metallionen, die in der Körperflüssigkeit vorliegen, reagieren, und die dadurch die Entwicklung unangenehmer Gerüche verhindern. Dies geschieht bevorzugt durch den Einsatz von Cyclodextrinen (jede Modifikation unsubstituierter Cyclodextrine, die 6 bis 12 Glucoseeinheiten enthält, wie beispielsweise alpha-Cyclodextrin, beta-Cyclodextrin, gamma-Cyclodextrin und / oder ihren Derivaten und / oder Mischungen daraus). Mischungen von Cyclodextrinen sind bevorzugt, da eine breitere Komplexierung organischer Moleküle über einen weiteren Molekulargewichtsbereich erfolgt. Cyclodextrine werden von 0.1% bis etwa 25 %, bevorzugt von 1% bis etwa 20 %, besonders bevorzugt von 2 % bis etwa 15 %, insbesondere bevorzugt von 3 bis 10 %, bezogen auf das Gesamtgewicht der Zusammensetzung, eingesetzt. Cyclodextrine werden in kleiner Partikelgröße (meist kleiner als 12 μm) zugesetzt, um zur Geruchseliminierung eine große Oberfläche anzubieten. Weitere Komplexbildner: Aminopolycarbonsäuren und ihre Salze, Ethylendiamintetraacetat EDTA Ethylendiaminpentamethylenphosphonsäure, Ethylendiamintetramethylenphosphonsäure, Aminophosphate, polyfunktionelle Aromaten, N,N-Disuccinsäure.

- Maskierung unangenehmer Gerüche durch Zusatz von Parfüms bzw. Deodorants. Diese werden in freier Form oder in eingekapselter Form (beispielsweise in Cyclodextrinen) zugesetzt. Letztere Form erlaubt es, das Parfüm zeitverzögert freizusetzen. Beispiele von Parfüms sind, ohne sich jedoch darauf zu beschränken: Allylcaproat, Allylcyclohexanacetat, Allylcyclohexanpropionat, Allylheptanoat, Amylacetat, Amylpropionat, Anetol, Anisol, Benzaldehyd, Benzylacetat, Benzylaceton, Benzylalkohol, Benzylbutyrat, Benzylformat, Benzylisovalerat, Benzylpropionat, Butylbenzoat, Butylcaproat, Campher, cis-3-Hexenylacetat, cis-3-Hexenylbutyrat, cis-3-Hexenylcaproat, cis-3-Hexenylvalerat, Zitronellol, Zitronellylderivate, Cyclal C, Cyclohexylethylacetat, 2-Decenal, Decylaldehyd, Dihydromyrcenol, Dimethylbenzylcarbinol und deren Derivate, Dimethyloktanol, Diphenyloxid, Ethylacetat, Ethylacetoacetat, Ethylamylketon, Ethylbenzoat, Ethylbutyrat, Ethylhexylketon, Ethylphenylacetat, Eucalyptol, Fenchylacetat, Fenchylalkohol, , Tricyclodecenylacetat, Tricyclodecenylpropionat, Geraniol, Geranyl-Derivate, Heptylacetat, Heptylisobutyrat, Heptylpropionat, Hexenol, Hexenylacetat, Hexenylisobutyrat, Hexylacetat, Hexylformat, Hexylisobutyrat, Hexylisovalerat, Hexylneopentanoat, Hydroxycitronellal, α-Ionon, β-Ionon, γ-Ionon, Isoamylalkohol, Isobornylacetat, Isobornylpropionat, Isobutylbenzoat, Isobutylcaproat, Isononylacetat, Isononylalkohol, Isomenthol, Isomenthon, Isononylacetat, Isopulegol, Isopulegylacetat, Isoquinolin, Dodecanal, Lavandulylacetat, Ligustral, δ-Limonen, Linalool und Derivate, Menthon, Menthylacetat, Methylacetophenon, Methylamylketon, Methylanthranilat, Methylbenzoat, Methylbenzylacetat, Methylchavicol, Methyleugenol, Methylheptenon, Methylheptincarbonat, Methylheptylketon, Methylhexylketon, Methylnonylacetaldehyd, α-iso "γ" Methylionon, Methyloktylacetaldehyd, Methyloktylketon, Methylphenylcarbinylacetat, Methylsa- - licylat, Myrcen, Myrcenylacetat, Neral, Nerol, Nerylacetat, Nonalakton, Nonylbutyrat, Nonylalkohol, Nonylacetat, Nonylaldehyd, Oktalakton, Oktylacetat, Oktylalkohol, Oktylaldehyd, D-Limonen, p-Kresol, p-Kresylmethylether, p-Kymene, p-Isopropyl- p-Methylacetophenon, Phenethylanthranilat, Phenoxyethanol, Phenylacetaldehyd, Phenylethylacetat, Phenylethylalkohol, Phenylethyldimethylcarbinol, α-Pinen,

β-Pinen, α-Terpinen, γ-Terpinen, Terpineol, Terpinylacetat, Terpinylpropionat, Tetrahydrolinalool, Tetrahydromyrcenol, Thymol, Prenylacetat, Propylbutyrat, Pulegon, Safrol, δ-Undecalakton, γ-Undecalakton, Undecanal, Undecylalkohol, Veratrol, Verdox, Vertenex, Viridin.

- Zugabe von Ureaseinhibitoren, die die Bildung oder Aktivität von Enzymen unterbinden, die für die Spaltung von Harnstoff in Ammoniak und somit für die Geruchsentwicklung verantwortlich zeichnen.

- Zugabe antimikrobieller Substanzen. Enzyme kontrollieren das bakterielle Wachstum und minimieren dadurch die Geruchsentwicklung, die über bakterielle Abbauvorgänge entsteht (z.B. Oxidoreductase + Mediator). Beispiele antimikrobieller Substanzen schließen quaternäre Ammoniumverbindungen, Phenole, Amide, Säuren und Nitroverbindungen, sowie deren Mischungen mit ein.

Beispiele für quaternäre Ammoniumverbindungen schließen 2-(3-anilinovinylul)3,4-dimethyloxazoliniumiodid, Alkylisoquinoliumbromid, Benzalkoniumchlorid, Benzethoniumchlorid, Cetylpyridiniumchlorid, Chlorhexidingluconat, Chlorhexidinehydrochlorid, Lauryltrimethylammonium-Verbindungen, Methylbenzethoniumchlorid, Stearyltrimethylammoniumchlorid, 2,4,5-Trichlorophenoxid, sowie deren Mischungen mit ein.

Beispiele für Phenole schließen Benzylalkohol, p-Chlorophenol, Chlorocresol, Chloroxylenol, Cresol, o-Kymene-5-ol (BIO-SOL), Hexachlorophen, Chinokitiol, Isopropylmethylphenol, Parabene (mit Methyl, Ethyl, Propyl, Butyl, Isobutyl, Isopropyl, und/oder Natrium-methyl-Substituenten), Phenethylalkohol, Phenol, Phenoxyethanol, o-Phenylphenol, Resorcin, Resorcinmonoacetat, Natriumparabene, Natriumphenolsulfonat, Thioxolon, 2,4,4'-trichloro-2'-hydroxidiphenylether, Zinkphenolsulfonat, Di-tert.-butylphenol, Hydrochinon; BHT, sowie deren Mischungen mit ein.

Beispiele für Amide schließen Diazolidinylurea, 2,4-imidazolidin-di-on (HYDATOIN), 3,4,4'-Trichlorocarbanilid, 3-Trifluoromethyl-4,4'-dichlorocarbanilid, Undecylensäuremonoethanolamid, sowie deren Mischungen mit ein.

Beispiele für Säuren schließen Benzoate, Benzoesäure, Zitronensäure, Dehydroessigsäure, Kaliumsorbat, Natriumcitrate, Natriumdehydroacetat, Natriumsalicylat, Natriumsalicylsäure, Sorbitansäure, Undecylensäure, Zinkundecylenat, Zinkoxid, Zinkphenolsulfonat, Ascorbinsäure, Acetylsalicylsäure, Salicylaldehyd, Salicylsäurederivate, Adipinsäure, Adipinsäurederivate, sowie deren Mischungen mit ein.

Beispiele für Nitroverbindungen schließen 2-Bromo-2-Nitro-2,3-Propandiol (BRONOPOL), Methyldibromoglutaronitril und Propyuleneglycol (MERGUARD), sowie deren Mischungen mit ein.

Daneben kommen noch folgende Verbindungen als Biozide in Frage: 2,5-Dimethoxytetrahydrofuran, 2,5-Diethoxytetrahydrofuran, 2,5-Dimethoxy-2,5-dihydrofuran, 2,5-Diethoxy-2,5-dihydrofuran, Succindialdehyd, Glutardialdehyd, Glyoxal, Glyoxylsäure, Hexahydrotriazin, Tetrahydro-3,5-dimethyl-2H-1,3,5-thiadiazine-2-thione (Dazomet), 2,4-Dichlorbenzylalkohol, Benzalkoniumchlorid, Chlorhexidingluconat, Triclosan.

- Einsatz von Mikrokapseln, welche die Aktivsubstanz bei Feuchtigkeit freisetzen;
- Einsatz von Übergangsmetallverbindungen (Cu, Ag, Zn).

Neben den bezeichneten Verbindungsklassen gelangen bei der Geruchskontrolle noch folgende Verbindungen zum Einsatz: Peroxide, Hydrogencarbonat, Triclosan, Pflanzenextrakte, etherische Öle, Borverbindungen, Poly-Alpha-Aminosäuren, (Polylysin), Imide, Polyimide, PVP-Jod, Verwendung bestimmter polymerer Substanzen wie Chitosan, Polyglycoside, Oxidationsmittel, Cyclophane.

Allgemein wirkt sich allerdings der Zusatz geruchsinhibierender Stoffe nachteilig auf das Absorptionsprofil der hochquellfähigen Hydrogele aus. Der getrennte Einbau des geruchsinhibierenden bzw. desodorierenden Komponentensystems und des superabsorbierenden Materials im Hygieneartikel vermindert in aller Regel das Absorptionsvermögen. Generell weisen Kombinationen ein schlechteres Eigenschaftsprofil auf als die Einzelkomponenten als solche. Weiterhin kann es zu Auftrennungen der einzelnen Komponenten unter mechanischer Belastung kommen, wie es beispielsweise beim Tragen des Hygieneartikels der Fall ist. Werden allerdings Abmischungen hergestellt, bei denen die Zusatzstoffe auf der Oberfläche der getrockneten superabsorbierenden Polymere haften, so kann es zur Veränderung der Oberflächeneigenschaften der absorbierenden Hydrogele kommen, jedoch nicht zur Beeinträchtigung der intrinsischen Absorptionseigenschaften. So kann z.B. eine Hydrophilierung oder eine Hydrophobierung eintreten, wodurch vorrangig die Flüssigkeitsaufnahmegeschwindigkeit beeinflusst wird. Generell ist allen diesen Polymeren jedoch gemeinsam, dass die Flüssigkeitsdurchlässigkeit (Permeabilität) durch gequollenes Gel unbefriedigend ist.

Die Geruchsbindung beim Einsatz von sauren Hydrogelen in Hygieneartikeln ist gut. Allerdings weisen sie ein schlechteres Absorptionsprofil auf, als es bei pH-neutralen Produkten der Fall ist.

Für die Verwendung der hochquellfähigen Hydrogele auf dem Hygienesektor werden derzeit Polymerisate eingesetzt, die einen Neutralisationsgrad zwischen 60 und 80 Mol%, bezogen auf die polymerisierten, Säuregruppen enthaltenden Monomereinheiten, besitzen. Bei der Geruchskontrolle wurde allerdings gefunden, dass generell ein höherer pH-Wert das Bakterienwachstum begünstigt. Dabei wird der Harnstoff im Urin verstärkt durch Urease in Kohlendioxid und Harnstoff gespalten, was zu einer weiteren Erhöhung des pH-Wertes führt. Dies wiederum verstärkt das Bakterienwachstum, und die Enzymtätigkeit wird weiter erhöht. Als Folge des erhöhten pH-Wertes kommt es zu Hautaufweichungen, die dadurch anfälliger für Bakterienbefall wird. Unmittelbare Folge davon sind Hautirritationen, die ein längere Tragezeit des Hygieneartikels ausschließen.

Der Herstellungsprozess völlig saurer Hydrogel-bildender Monomere ist bekannt und mehrfach in der Literatur beschrieben. So werden nach EP 205 674 A1 völlig saure Polymerisate bei Temperaturen von 0 bis 100 °C, bevorzugt 5 bis 40 °C hergestellt, die durch nachträgliche Teilneutralisation der Hydrogele eingestellt werden. Die Polymerisate zeichnen sich durch verbesserte Absorptionskapazität sowie durch geringere extrahierbare Anteile aus. Ebenso werden nach US 5,145,906 und EP 530 438 B1 in sauerer Polymerisation, d.h. ohne Neutralisation der Monomeren aus Acrylsäure mit wasserlöslichen Hydroxylgruppen enthaltenden Polymeren Polymerisatgele hergestellt, die nachfolgend zerkleinert und durch wässrige Basen teilweise oder vollständig neutralisiert werden, und anschließend einer Nachvernetzung unterworfen werden. Allen Verfahren ist jedoch gemeinsam, dass die Polymerisation der Monomerlösung (wie in EP 467 073 A1 gezeigt) sehr langsam verläuft, so dass nur eine diskontinuierliche Verfahrensweise möglich ist. Eine Erhöhung der Initiatormenge bzw. ein Anheben der Polymerisationstemperatur wirkt sich nachteilig auf das Absorptionsprofil der Hydrogele aus. Außerdem treten erhebliche Probleme während des Herstellungsprozesses bei der Zerteilung des völlig sauren Polymerisatgeles auf, und die Neutralisation im Anschluss erfolgt lediglich diffusionskontrolliert, so dass die Polymerisatoberfläche einen Basenüberschuss aufweist. Generell zeigen Hydrogele, die durch saure Polymerisation hergestellt werden, schlechtere Absorptionswerte unter Druckbelastung, sowie ein erhebliches Rückfeuchtungsverhalten auf, was sich nachteilig für den Einsatz auf dem Hygienesektor auswirkt.

Umgekehrt sind Verfahren bekannt, bei denen die Monomerenlösung bereits einer Teilneutralisation unterworfen wurde, und deren Polymerisatgele im Anschluss an die Polymerisation letztendlich auf den gewünschten Neutralisationsgrad eingestellt werden. So wird in DE 195 29 348 beispielsweise von einem Verfahren berichtet, bei dem die Monomerenlösung zu 5 bis 30 Mol%, bevorzugt zu 5 bis 20 Mol%, besonders bevorzugt zu 5 bis 10 Mol% bezogen auf die Säuregruppen enthaltenden Monomere teilneutralisiert wird, worauf der teilneutralisierte Monomeransatz polymerisiert und anschließend das Polymerisat weiter neutralisiert wird, bis mindestens 50 Mol% der darin enthaltenen Säuregruppen neutralisiert sind. Nach diesem Verfahren können Polymerisate mit hohem Retentionswert und hohem Aufnahmevermögen unter konstantem und ansteigendem Druck sowie mit geringen extrahierbaren Anteilen erhalten werden. EP 0583 178 B1 schlägt hingegen ein Verfahren zur Herstellung von superabsorbierenden, aus teilweise neutralisierten Polyacrylsäuren bestehenden Pulvern vor, das aus auf einer sequentiellen, inversen Suspensionspolymerisation zweier Chargen unterschiedlichen Neutralisationsgrades (Charge I: Neutralisationsgrad 90 - 100 %, Charge II: Neutralisationsgrad 50 - 60 %) beruht, wobei Charge II vor der Polymerisation von dem Polymerisat der Charge I absorbiert wird.

In keinem der angegebenen Verfahren ist es gelungen, Hydrogel-bildende Polymerisate zu generieren, die alle Vorzüge der optimierten hautneutralen Superabsorber hinsichtlich des Absorptionsprofils auf saure Polymerisate zu übertragen, so dass es jeweils einer separaten Geruchskontrolleinheit bedarf.

GB 2326348 A und WO 00/35502 berichten eindrucksvoll von den Zusammenhängen des Bakterienwachstums mit dem pH-Wert des umgebenden Mediums. Demnach ist eine effektive Kontrolle des Bakterienwachstums nur bei pH-Werten zwischen 3.5 und 4.9, bevorzugt zwischen 4.1 und 4.7 möglich. Dies würde einem Neutralisationsgrad von 20 bis 35 Mol% entsprechen. Unberücksichtigt bleibt in diesen Schriften jedoch die Quantifizierung des Absorptionsprofils, das Hydrogelen dieses Neutralisationsgrades zugrunde liegt. Allgemein wird in GB 2326348 A erwähnt, dass der Abfall der Absorptionskapazität durch einen höheren Hydrogelanteil ausgeglichen werden müsste. WO 00/35502 schlägt hingegen den Einbau der Hydrogel-bildenden Substanz in einer Schicht innerhalb des Hygieneartikels vor, die der Haut näher liegt.

Es bestand daher die Aufgabe, modifizierte Superabsorber und ein Verfahren zu deren Herstellung zur Verfügung zu stellen, die bei Verwendung in Hygieneartikeln eine verbesserte Geruchsinhibierung aufweisen bei gleichzeitig hervorragendem Absorptionsprofil des hochquellfähigen Hydrogelmaterials. Demnach soll dieses bevorzugt über ein schnelles Anquellvermögen und gute Transporteigenschaften bei gleichzeitig hohem Endabsorptionsvermögen, sowie verbesserte Gelfestigkeit und höhere Elektrolyttoleranz verfügen, ohne den nachteiligen Effekt des Gelblockings aufzuweisen. Die hohe Zielsetzung der Absorptionsleistung soll durch das Geruchskontrollsystem nicht wesentlich beeinträchtigt werden wie es derzeit noch bei der Geruchskontrolle auf dem Hygienesektor aus dem Stand der Technik der Fall ist.

Überraschenderweise wird diese Aufgabe gelöst bevorzugt durch den alleinigen Einsatz hochquellfähiger Hydrogele, deren Säuregruppen zu geringerem Anteil durch die Zugabe von Basen, vor oder nach der Polymerisation teilneutralisiert worden sind. Der Bereich der Teilneutralisation liegt bei 5 bis 60 Mol-%, vorzugsweise bei 10 bis 40 Mol-%, besonders bevorzugt bei 20 bis 30 Mol-%, bezogen auf die Säuregruppen enthaltenden Monomere.

Gegenstand der vorliegenden Erfindung ist demnach Herstellung und Einsatz saurer hochquellfähiger Hydrogele des obigen Neutralisationsgrades, bei dem vorzugsweise keine weiteren Substanzen zur Geruchsinhibierung zugesetzt sind. Überraschenderweise konnte weiterhin zur Quantifizierung des Absorptionsprofils ein Parameter pH Absorbency Index ($pH_{AI}$) entwickelt werden, der eine aussagekräftige Beurteilung neuentwickelten Hydrogelmaterials zulässt. Außerdem kann mit dem Parameter $pH_{AI}$ eine einfache Testmethode zum Screenen und Optimieren von neuen Materialien zur Verfügung gestellt werden, das die relevanten Kenngrößen der Superabsorber zusammenfaßt und gewichtet.

Um neue Materialien herzustellen und zu optimieren werden in zunehmenden Maße parallele Synthesen, auch mit Hilfe von Syntheserobotern, durchgeführt. Das erhaltene Material muss zur Beurteilung einer Prüfung unterliegen, damit die nächste Generation von Materialien bezüglich eines oder mehrerer Parameter weiter optimiert werden kann. Die vorliegende Erfindung stellt mit dem pH Absorbancy Index ein Prüfparameter zur Verfügung der eine einfache und doch aussagekräftige Beurteilung der Superabsorber zulässt. Auch die Bestimmung der einzelnen Parameter die zur Berechnung des Index nötig sind können, miniaturisiert und parallelisiert werden, so dass ein Hochdurchsatz Screening (HTS), wie in der Pharma- und Pflanzenschutz-Wirkstoffsuche üblich, durchgeführt werden kann. Die Indices pH, CRC und AUL-0.7psi können dabei entweder wie in der Beschreibung angegeben bestimmt werden, oder abgeschätzt werden, in dem äquivalente Bestimmungen durchgeführt werden. Solche Äquivalente sind zum Beispiel Berechnung des Neutralisationsgrad des eingesetzten Monomeren, nachträgliche Neutralisation des Gels mit bekannter Menge an Neutralisationsagens etc für den pH-Wert; die AUL-0.7psi kann ebenfalls durch ähnliche Tests bei anderen Drücken ersetzt werden.

Zum Screenen von Superabsorbern wird bei einer Mehrzahl von Superabsorberproben der pH-Wert, der CRC-Wert und die AUL-0.7psi bestimmt oder abgeschätzt und aus den Werten der pH-Absorbency-Index bestimmt oder abgeschätzt. Das mehrfache (iterative) Ausführen dieses Screeningverfahrens, wobei einer oder mehrere auch gegenläufig wirkende Parameter variiert werden, erlaubt bei jeweiliger Messung des pH-Absorbancy-Index die Optimierung des Superabsorbers durch variierte Herstellungsverfahren. Ein Verfahren zur Bestimmung des Quellverhaltens von Polymergelen unter Druck ist in PCT/EP/01/12959 beschrieben und kann entsprechend angepaßt werden.

Handelsübliches superabsorbierendes Material weist einen pH-Wert von 6 auf. Es ist bekannt, dass die größte Absorptionskapazität bei Hydrogelen mit diesem pH-Wert vorliegt. Bei diesem pH-Wert ist zudem eine hohe Quellgeschwindigkeit zu verzeichnen. Allerdings liegt der pH-Wert dieser optimalen Absorptionsleistung deutlich oberhalb des pH-Wertes der Haut, so dass es zu Reizungen und Hautirritationen kommen kann.

Das Absorptionsvermögen bei dem pH-Wert = 6 lässt sich mit den Werten für Absorption unter Druckbelastung (0.7 psi) (AUL) von z.B. 25 g/g und einer Zentrifugenretention CRC von z.B. 35 g/g quantifizieren. Da obige Zahlenwerte über den pH-Wert miteinander korreliert sind, können diese in einfacher Weise zu einem Parameter zusammengefasst werden. Ausgangspunkt der Berechnung stellt die Differenz des pH-Wertes zum pH-Wert von 7 dar:

$\Delta$ pH = 7 - pH des entsprechenden Produktes

Der Parameter wird daraus wie folgt als pH Absorbency Index = $pH_{AI}$ berechnet:

$$pH_{AI} = \Delta\, pH \cdot (AUL_{0.7psi} + CRC)$$

Er stellt ein gute Möglichkeit dar, mittels der Angabe eines einzigen Zahlenwertes die Leistungsfähigkeit des hochquellfähigen Hydrogelmaterials zu quantifizieren.

Handelsübliches Polymermaterial mit pH = 6, $AUL_{0.7psi}$ = 25 g/g und CRC = 35 g/g ergibt nach obiger Berechnung einen pH Absorbency Index von

$$pH_{AI} = (7-6) \cdot (25 + 35) = 60$$

Da es sich bei den handelsüblichen Produkten um - für das Einsatzgebiet Hygienesektor -optimiertes hochquellfähiges Hydrogelmaterial handelt, kann der Summenfaktor von 60 als untere Grenze der Leistungsfähigkeit eines superabsorbierenden Produktes betrachtet werden.

Es konnte festgestellt werden, dass herkömmliches handelsübliches Hydrogelmaterial ohne jegliche Geruchskontrolle einen Summenfaktor im Bereich von 55 bis 80, überwiegend von 60 bis 70 aufweist.

Die vorliegende Erfindung betrifft demnach wässrige Flüssigkeiten absorbierende saure Hydrogel-formende Polymere, deren Säuregruppen enthaltende Monomere in geringer Menge durch die Zugabe von Basen teilneutralisiert worden sind, wobei die Neutralisation vor oder nach erfolgter Polymerisation erfolgen kann. Der Bereich der Teilneutralisation liegt bei 5 bis 60 Mol%, vorzugsweise bei 10 bis 40 Mol%, besonders bevorzugt bei 20 bis 30 Mol%, bezogen auf die Säuregruppen enthaltenden Monomere. Insbesondere betrifft die vorliegende Erfindung Flüssigkeiten absorbierende Hydrogel-formende Polymere mit einem pH-Wert von $\leq$ 5,7, die einen pH-Absorbency-Index von mindestens 80 aufweisen.

Erfindungsgemäßes saures Hydrogelmaterial hingegen weist bei vollständiger Geruchskontrolle durch effektive

Eindämmung des Bakterienwachstums und hohe Absorptionsleistung einen Summenfaktor von über 100, z.B. 100 bis 130 auf.

Experimenteller Teil

Verfahren zur Herstellung

a) Eingesetzte Monomere

Hydrogel-formende Polymere sind insbesondere Polymere aus (co-)polymerisierten hydrophilen Monomeren, Pfropf(co-)polymere von einem oder mehreren hydrophilen Monomeren auf eine geeignete Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate, Alginate und Carrageenane.

Geeignete Pfropfgrundlagen können natürlichen oder synthetischen Ursprungs sein. Beispiele sind Stärke, Cellulose oder Cellulosederivate sowie andere Polysacharide und Oligosacharide, Polyvinylalkohol, Polyalkylenoxide, insbesondere Polyethylenoxide und Polypropylenoxide, Polyamine, Polyamide sowie hydrophile Polyester. Geeignete Polyalkylenoxide haben beispielsweise die Formel

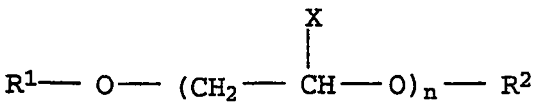

| | |
|---|---|
| $R^1$ und $R^2$ | unabhängig voneinander Wasserstoff, Alkyl, Alkenyl oder Acryl, |
| X | Wasserstoff oder Methyl und |
| n | eine ganze Zahl von 1 bis 10000 bedeuten. |

$R^1$ und $R^2$ bedeuten bevorzugt Wasserstoff, ($C_1$ - $C_4$)-Alkyl, ($C_2$ - $C_6$)-Alkenyl oder Phenyl.

Bevorzugt sind als Hydrogel-formende Polymere vernetzte Polymere mit Säuregruppen, die überwiegend in Form ihrer Salze, in der Regel Alkali- oder Ammoniumsalze, vorliegen. Derartige Polymere quellen bei Kontakt mit wässrigen Flüssigkeiten besonders stark zu Gelen auf.

Bevorzugt sind Polymere, die durch vernetzende Polymerisation oder Copolymerisation von säuregruppentragenden monoethylenisch ungesättigten Monomeren oder deren Salzen erhalten werden. Ferner ist es möglich, diese Monomere ohne Vernetzer zu (co-)polymerisieren und nachträglich zu vernetzen.

Solche Säuregruppen tragenden Monomere sind beispielsweise monoethylenisch ungesättigte $C_3$- bis $C_{25}$-Carbonsäuren oder Anhydride wie Acrylsäure, Methacrylsäure, Ethacrylsäure, $\alpha$-Chloracrylsäure, Crotonsäure, Maleinsäure, Maleinsäureanhydrid, Itaconsäure, Citraconsäure, Mesaconsäure, Glutaconsäure, Aconitsäure und Fumarsäure. Weiterhin kommen monoethylenisch ungesättigte Sulfon- oder Phosphonsäuren in Betracht, beispielsweise Vinylsulfonsäure, Allylsulfonsäure, Sulfoethylacrylat, Sulfomethacrylat, Sulfopropylacrylat, Sulfopropylmethacrylat, 2-Hydroxy-3-acryloxypropylsulfonsäure, 2-Hydroxy-3-methacryl-oxypropylsulfonsäure, Vinylphosphonsäure, Allylphosphonsäure, Styrolsulfonsäure und 2-Acrylamido-2-methylpropansulfonsäure. Die Monomeren können allein oder in Mischung untereinander eingesetzt werden.

Bevorzugt eingesetzte Monomere sind Acrylsäure, Methacrylsäure, Vinylsulfonsäure, Acrylamidopropansulfonsäure oder Mischungen dieser Säuren, z. B. Mischungen aus Acrylsäure und Methacrylsäure, Mischungen aus Acrylsäure und Acrylamidopropan-sulfonsäure oder Mischungen aus Acrylsäure und Vinylsulfonsäure.

Zur Optimierung von Eigenschaften kann es sinnvoll sein, zusätzliche monoethylenisch ungesättigte Verbindungen einzusetzen, die keine Säuregruppen tragen, aber mit den säuregruppentragenden Monomeren copolymerisierbar sind. Hierzu gehören beispielsweise die Amide und Nitrile von monoethylenisch ungesättigten Carbonsäure, z. B. Acrylamid, Methacrylamid und N-Vinylformamid, N-Vinylacetamid, N-Methyl-vinylacetamid, Acrylnitril und Methacrylnitril.

Weitere geeignete Verbindungen sind beispielsweise Vinylester von gesättigten $C_1$- bis $C_4$-Carbonsäuren wie Vinylformiat, Vinylacetat oder Vinylpropionat, Alkylvinylether mit mindestens 2 C-Atomen in der Alkylgruppe, wie z. B. Ethylvinylether oder Butylvinylether, Ester von monoethylenisch ungesättigten $C_3$- bis $C_6$-Carbonsäuren, z. B. Ester aus einwertigen $C_1$- bis $C_{18}$-Alkoholen und Acrylsäure, Methacrylsäure oder Maleinsäure, Halbester von Maleinsäure, z. B. Maleinsäuremono-methylester, N-Vinyllactame wie N-Vinylpyrrolidon oder N-Vinylcaprolactam, Acrylsäure- und Methacrylsäureester von alkoxylierten einwertigen, gesättigten Alkoholen, z. B. von Alkoholen mit 10 bis 25 C-Atome, die mit 2 bis 200 Mol Ethylenoxid und/oder Propylenoxid pro Mol Alkohol umgesetzt worden sind, sowie Monoacrylsäureester

und Monomethacrylsäureester von Polyethylenglykol oder Polypropylenglykol, wobei die Molmassen ($M_n$) der Polyalkylenglykole beispielsweise bis zu 2000 betragen können. Weiterhin geeignete Monomere sind Styrol und alkylsubstituierte Styrole wie Ethylstyrol oder tert.-Butylstyrol.

Diese keine säuregruppentragenden Monomere können auch in Mischung mit anderen Monomeren eingesetzt werden, z. B. Mischungen aus Vinylacetat und 2-Hydroxyethylacrylat in beliebigem Verhältnis. Diese keine Säuregruppen tragenden Monomere werden der Reaktionsmischung in Mengen zwischen 0 und 50-Gew.-%, vorzugsweise kleiner 20 Gew.-% zugesetzt.

Bevorzugt werden vernetzte Polymere aus Säuregruppen tragenden monoethylenisch ungesättigten Monomeren, die gegebenenfalls vor oder nach der Polymerisation in ihre Alkali- oder Ammoniumsalze überführt werden, und aus 0-40 Gew.-% bezogen auf ihr Gesamtgewicht keine säuregruppentragenden monoethylenisch ungesättigten Monomeren.

Bevorzugt werden vernetzte Polymere aus monoethylenisch ungesättigten $C_3$- bis $C_{12}$-Carbonsäuren und/oder deren Alkali- oder Ammoniumsalzen. Insbesondere werden vernetzte Polyacrylsäuren bevorzugt, deren Säuregruppen zu 5 bis 30 Mol%, vorzugsweise bei 5 bis 20 Mol%, besonders bevorzugt bei 5 bis 10 Mol%, bezogen auf die Säuregruppen enthaltenden Monomere als Alkali- oder Ammoniumsalze vorliegen.

Als Vernetzer können Verbindungen fungieren, die mindestens zwei ethylenisch ungesättigte Doppelbindungen aufweisen. Beispiele für Verbindungen dieses Typs sind N,N'-Methylenbisacrylamid, Polyethylenglykoldiacrylate und Polyethylenglykoldimethacrylate, die sich jeweils von Polyethylenglykolen eines Molekulargewichts von 106 bis 8500, vorzugsweise 400 bis 2000, ableiten, Trimethylolpropantriacrylat, Trimethylolpropantrimethacrylat, Ethylenglykoldiacrylat, Ethylenglykoldimethacrylat, Propylenglykoldiacrylat Propylenglykoldimethacrylat, Butandioldiacrylat, Butandioldimethacrylat, Hexandioldiacrylat, Hexandioldimethacrylat, Allylmethacrylat, Diacrylate und Dimethacrylate von Blockcopolymerisaten aus Ethylenoxid und Propylenoxid, zweifach bzw. mehrfach mit Acrylsäure oder Methacrylsäure veresterte mehrwertige Alkohole, wie Glycerin oder Pentaerythrit, Triallylamin, Dialkyldiallylammoniumhalogenide wie Dimethyldiallylammoniumchlorid und Diethyldiallylammoniumchlorid, Tetraallylethylendiamin, Divinylbenzol, Diallylphthalat, Polyethylenglykoldivinylether von Polyethylenglykolen eines Molekulargewichtes von 106 bis 4000, Trimethylolpropandiallylether, Butandioldivinylether, Pentaerythrittriallylether, Umsetzungsprodukte von 1 Mol Ethylenglykoldiglycidylether oder Polyethylenglykoldiglycidylether mit 2 Mol Pentaerythritoltriallylether oder Allylalkohol, und/oder Divinylethylenharnstoff. Vorzugsweise, setzt man wasserlösliche Vernetzer ein, z. B. N,N'-Methylenbisacrylamid, Polyethylenglykoldiacrylate und Polyethylenglykol-dimethacrylate, die sich von Additionsprodukten von 2 bis 400 Mol Ethylenoxid an 1 Mol eines Diols oder Polyols ableiten, Vinylether von Additionsprodukten von 2 bis 400 Mol Ethylenoxid an 1 Mol eines Diols oder Polyols, Ethylenglykoldiacrylat, Ethylenglykoldimethacrylat oder Triacrylate und Trimethacrylate von Additionsprodukten von 6 bis 20 Mol Ethylenoxid an 1 Mol Glycerin, Pentaerythrittriallylether und/oder Divinylharnstoff. Vom gleichen Vernetzungsgrad wird in dieser Erfindung gesprochen, wenn die Mol-Verhältnisse zwischen säuregruppen tragenden Monomeren und Vernetzer bezüglich ethylenisch ungesättigter Doppelbindungen konstant bleiben.

Als Vernetzer kommen außerdem Verbindungen in Betracht, die mindestens eine polymerisierbare ethylenisch ungesättigte Gruppe und mindestens eine weitere funktionelle Gruppe enthalten. Die funktionelle Gruppe dieser Vernetzer muss in der Lage sein, mit den funktionellen Gruppen, im wesentlichen den Säuregruppen, der Monomeren zu reagieren. Geeignete funktionelle Gruppen sind beispielsweise Hydroxyl-, Amino-, Epoxi- und Aziridinogruppen. Verwendung finden können z. B. Hydroxyalkylester der oben genannten monoethylenisch ungesättigten Carbonsäuren, z. B. 2-Hydroxyethylacrylat, Hydroxypropylacrylat, Hydroxybutylacrylat, Hydroxyethylmethacrylat, Hydroxypropylmethacrylat und Hydroxybutylmethacrylat, Allylpiperidiniumbromid, N-Vinylimidazole wie z. B. N-Vinylimidazol, 1-Vinyl-2-methylimidazol und N-Vinylimidazoline wie N-Vinylimidazolin, 1-Vinyl-2-methylimidazolin, 1-Vinyl-2-ethylimidazolin oder 1-Vinyl-2-propylimidazolin, die in Form der freien Basen, in quaternisierter Form oder als Salz bei der Polymerisation eingesetzt werden können. Außerdem eignen sich Dialkylaminoethylacrylat, Dimethylaminoethylmethacrylat, Diethylaminoethylacrylat und Diethylaminoethylmethacrylat. Die basischen Ester werden vorzugsweise in quaternisierter Form oder als Salz eingesetzt. Weiterhin kann z. B. auch Glycidyl(meth)acrylat eingesetzt werden.

Weiterhin kommen als Vernetzer Verbindungen in Betracht, die mindestens zwei funktionelle Gruppen enthalten, die in der Lage sind, mit den funktionellen Gruppen, im wesentlichen den Säuregruppen der Monomeren zu reagieren. Die hierfür geeigneten funktionellen Gruppen wurden bereits oben genannt, d. h. Hydroxyl-, Amino-, Epoxi-, Isocyanat-, Ester-, Amido- und Aziridinogruppen. Beispiele für solche Vernetzer sind Ethylenglykol, Diethylenglykol, Triethylenglykol, Tetraethylenglykol, Polyethylenglykol, Glycerin, Polyglycerin, Triethanolamin, Propylenglykol, Polypropylenglykol, Blockcopolymerisate aus Ethylenoxid und Propylenoxid, Ethanolamin, Sorbitanfettsäureester, ethoxylierte Sorbitanfettsäureester, Trimethylolpropan, Pentaerythrit, 1,3-Butandiol, 1,4-Butandiol, Polyvinylalkohol, Sorbit, Stärke, Polyglycidylether wie Ethylenglykoldiglycidylether, Polyethylenglykol-diglycidylether, Glycerindiglycidylether, Glycerinpolyglycidylether, Diglycerinpolyglycidylether, Polyglycerinpolyglycidylether, Sorbitpolyglycidylether, Pentaerythritpolyglycidylether, Propylenglykoldiglycidylether-und Polypropylenglykoldiglycidylether, Polyaziridinverbindungen wie 2,2-Bishydroxymethylbutanol-tris[3-(1-aziridinyl)-propionat], 1,6-Hexamethylendiethylenharnstoff, Diphenylmethan-bis-4,4'-N,N'-diethylenharnstoff, Halogenepoxyverbindungen wie Epichlorhydrin und $\alpha$-Methylepifluorhydrin, Polyisocyanate wie 2,4-Toluylendiisocyanat und Hexamethylendiisocyanat, Alkylencarbonate wie 1,3-Dioxolan-2-on und 4-Methyl-1,3-dioxolan-2-on, weiterhin Bisoxazoline und Oxazolidone, Polyamidoamine sowie deren Umsetzungsprodukte mit Epichlorhydrin, ferner polyquaternäre Amine wie Kondensationsprodukte von Dimethylamin mit Epichlorhydrin, Homo- und Copolymere von Diallyldimethylammoniumchlorid sowie Homo- und Copolymerisate von Dimethylaminoethyl(meth)acrylat, die gegebenenfalls mit beispielsweise Methylchlorid quaterniert sind.

Weitere geeignete Vernetzer sind polyvalente Metallionen, die in der Lage sind, ionische Vernetzungen auszubilden. Beispiele für solche Vernetzer sind Magnesium-, Calcium-, Barium- und Aluminiumionen. Diese Vernetzer werden beispielsweise als Hydroxide, Carbonate oder Hydrogencarbonate eingesetzt. Weitere geeignete Vernetzer sind multifunktionelle Basen, die ebenfalls in der Lage sind, ionische Vernetzungen auszubilden, beispielsweise Polyamine oder deren quaternierte Salze. Beispiele für Polyamine sind Ethylendiamin, Diethylentriamin, Triethylentetramin, Tetraethylenpentamin, Pentaethylenhexamin und Polyethylenimine sowie Polyamine mit Molmassen von jeweils bis zu 4000000.

Die Vernetzer sind in der Reaktionsmischung beispielsweise von 0,001 bis 20 und vorzugsweise von 0,01 bis 14 Gew.-% vorhanden.

a) Radikalische Polymerisation

Die Polymerisation wird wie allgemein üblich durch einen Initiator ausgelöst. Auch eine Initiierung der Polymerisation durch Einwirkung von Elektronenstrahlen auf die polymerisierbare, wässrige Mischung ist möglich. Die Polymerisation kann allerdings auch in Abwesenheit von Initiatoren der obengenannten Art durch Einwirkung energiereicher Strahlung in Gegenwart von Photoinitiatoren ausgelöst werden. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxide, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat-. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, -tert.-Butylperpivalat, tert.-Butylperneohexanoat, tert.-Butylperisobutyrat, tert.-Butyl-per-2-ethylhexanoat, tert.-Butylperisononanoat, tert.-Butylpermaleat, tert.-Butylperbenzoat, Di-(2-ethylhexyl) peroxidicarbonat, Dicyclohexylperoxidicarbonat, Di-(4-tert.-butylcyclohexyl)peroxidicarbonat, Dimyristilperoxidicarbonat, Diacetylperoxi-dicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat. Besonders geeignete Polymerisationsinitiatoren sind wasserlösliche Azostarter, z. B. 2,2'-Azo-bis-(2-amidinopropan)dihydrochlorid, 2,2'-Azo-bis-(N,N'-dimethylen)isobutyramidin-dihydrochlorid, 2-(Carbamoylazo)isobutyronitril, 2,2'-Azo-bis[2-(2'-imidazolin-2-yl) propan]dihydrochlorid und 4,4'-Azo-bis-(4-cyanovaleriansäure). Die genannten Polymerisationsinitiatoren werden in üblichen Mengen eingesetzt, z. B. in Mengen von 0,01 bis 5, vorzugsweise 0,05 bis 2,0 Gew.-%, bezogen auf die zu polymerisierenden Monomeren.

Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetallhydrogensulfit, -sulfit, -thiosulfat, -hyposulfit, -pyro-sulfit oder -sulfid, Metallsalze, wie Eisen(II)-ionen oder Natriumhydroxymethylsulfoxylat. Vorzugsweise verwendet man als reduzierende Komponente des Redoxkatalysators Ascorbinsäure oder Natriumsulfit. Bezogen auf die bei der Polymerisation eingesetzte Menge an Monomeren verwendet man beispielsweise 3 x $10^{-6}$ bis 1 Mol-% der reduzierenden Komponente des Redoxkatalysatorsystems und 0,001 bis 5,0 Mol-% der oxidierenden Komponente des Redoxkatalysators.

Wenn man die Polymerisation durch Einwirkung energiereicher Strahlung auslöst, verwendet man üblicherweise als Initiator sogenannte Photoinitiatoren. Hierbei kann es sich beispielsweise um sogenannte $\alpha$-Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, Anthrachinon-Derivate, Thioxanton-Derivate, Cumarin-Derivate, Benzoinether und deren Derivate, Azoverbindungen wie die oben genannten Radikalbildner, substituierte Hexaarylbisimidazole oder Acylphosphinoxide. Beispiele für Azide sind: 2-(N,N-Dimethylamino)-ethyl-4-azidocinnamat, 2-(N, N-Dimethyl-amino)-ethyl-4-azidonäphthylketon, 2-(N,N-Dimethylamino)-ethyl-4-azidobenzoat, . 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, -2,6-Bis (p-azidobenzyliden) cyclohexanon und 2,6-Bis-(p-azido-benzyliden)-4-methylcyclohexanon. Die Photoinitiatoren werden, falls sie eingesetzt werden, üblicherweise in Mengen von 0,01 bis 5 Gew.-% bezogen auf die zu polymerisierenden Monomeren angewendet.

Die vernetzten Polymere werden vorzugsweise teilneutralisiert eingesetzt. Der Neutralisationsgrad beträgt bevorzugt 5 bis 60 Mol%, vorzugsweise 10 bis 40 Mol%, besonders bevorzugt 20 bis 30 Mol%, bezogen auf die Säuregruppen enthaltenden Monomere. Als Neutralisationsmittel kommen in Frage: Alkalimetallbasen oder Ammoniak bzw. Amine. Vorzugsweise wird Natronlauge, Kalilauge oder Lithiumhydroxid verwendet. Die Neutralisation kann jedoch auch mit Hilfe von Natriumcarbonat, Natriumhydrogencarbonat, Kaliumcarbonat oder Kaliumhydrogencarbonat oder anderen Carbonaten oder Hydrogencarbonaten oder Ammoniak vorgenommen werden. Darüberhinaus sind prim., sek. und tert. Amine einsetzbar.

Alternativ kann die Einstellung des Neutralisationsgrades vor, während oder nach der Polymerisation in allen dafür geeigneten Apparaturen vorgenommen werden. Die Neutralisation kann beispielsweise bei Verwendung eines Kneters zur Polymerisation auch direkt hierin vorgenommen werden. Bevorzugt wird die Neutralisation vor der Polymerisation durchgeführt.

Als technische Verfahren zur Herstellung dieser Produkte können alle Verfahren Anwendung finden, die üblicherweise bei der Herstellung von Superabsorbern eingesetzt werden, wie sie z. B. im Kapitel 3 in "Modern Superabsorbent Polymer Technology", F.L. Buchholz and A.T. Graham, Wiley-VCH, 1998, erläutert sind.

Bevorzugt ist die Polymerisation in wässriger Lösung als sogenannte Gelpolymerisation. Dabei werden 10 bis 70 Gew.-%ige wässrige Lösungen der Monomere und gegebenenfalls einer geeigneten Pfropfgrundlage in Gegenwart eines Radikalinitiators unter Ausnutzung des Trommsdorff-Norrish-Effektes polymerisiert.

Die Polymerisationsreaktion kann im Temperaturbereich zwischen 0 °C und 150 °C, vorzugsweise zwischen 10 °C und 100 °C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden.

Durch mehrstündiges Nachheizen der Polymerisatgele im Temperaturbereich 50 bis 130 °C, vorzugsweise 70 bis 100 °C, können die Qualitätseigenschaften der Polymerisate noch verbessert werden.

Die folgende Auflistung bezieht sich auf besonders bevorzugte Bedingungen für Herstellverfahren von Gelen und von getrockneten Gelen vor der Oberflächennachvernetzung (Base Polymeren). Die fehlenden Gewichtprozent bis 100% sind mit Wasser zu ergänzen.

Base Polymer 1:

Acrylsäure: 25-40 Gew.-% bezogen auf Ansatzgröße, bevorzugt 28-35 Gew%, insbesondere etwa 31 Gew.-% bezogen auf Ansatzgröße;

NaOH 50 %ig: 20-30 Mol-% bezogen auf Acrylsäure, bevorzugt 22-29 Mol-%, mehr bevorzugt 23 bis 28 Mol%, besonders bevorzugt 24 bis 27 Mol%, insbesondere etwa 25,2 Mol-% bezogen auf Acrylsäure, eine entsprechende Neutralisation kann auch mit anderen Neutralisationsmitteln erreicht werden;

Polyethylenglykol-400-diacrylat: 0,005-1,0 Gew.-% bezogen auf Acrylsäure, bevorzugt 0,1-0,4 Gew.-%, besonders bevorzugt 0.15-0,25 Gew.-%, insbesondere etwa 0,2 Gew.-% bezogen auf Acrylsäure;

Natriumpersulfat: 0,2-0,4 Gew.-% bezogen auf Acrylsäure, bevorzugt 0,25-0,35 Gew.-%, insbesondere etwa 0,28 Gew.% bezogen auf Acrylsäure;

Ascorbinsäure: 0,005-0,006 Gew.-% bezogen auf Acrylsäure, bevorzugt 0,0053- 0,0058 Gew.-% insbesondere etwa 0,0056 Gew.-% bezogen auf Acrylsäure;

Sorbitanmonococoat: 0 bis zu 0,1 Gew.% bezogen auf Acrylsäure;

Als Vernetzungsmittel können auch andere Vernetzer mit mindestens 2 ethylenisch ungesättigten Doppelbindungen verwendet werden, wie z.B. ETMPTA (ethoxiliertes Trimethylolpropantriacrylat ( LAROMER® LR 9015 X der BASF AG ) an Stelle des Polyethylenglykol-400-diacrylat): 0,2-0,5 Gew.-% bezogen auf Acrylsäure; entscheidend ist, dass in etwa der gleiche Vernetzungsgrad erreicht wird.

Als Initiator können auch andere analog wirkende Systeme oder Einzelkomponenten verwendet werden. Bei Strahlungsinitiation müssen entsprechende Strahlungsinitiatoren verwendet werden.

Temperatur bei Polymerisationsstart: 15-35°C, insbesondere etwa 25°C;

Das erhaltene Gel 1 wird durch Trocknung in das Basepolymer 1 überführt.

Trocknungstemperatur Gel: 120-200 °C, bevorzugt 140-180 C, insbesondere etwa 160°C.

Base Polymer 2:

Acrylsäure: 25-40 Gew.-% bezogen auf Ansatzgröße, bevorzugt 28-35 Gew%, insbesondere etwa 30 Gew.-% bezogen auf Ansatzgröße;

$NaHCO_3$: 23-38 Gew-% bezogen auf Acrylsäure, bevorzugt 27 bis 35 Gew%, besonders bevorzugt 30 bis 33 Gew%, insbesondere etwa 31.5 Gew-% bezogen auf Acrylsäure, eine entsprechende Neutralisation kann auch mit anderen Neutralisationsmitteln erreicht werden;

Sorbitanmonococoat: 0 bis zu 0,15 Gew.% bezogen auf Acrylsäure, bevorzugt 0.02-0,1 Gew.-%, insbesondere etwa 0,065 Gew.-% bezogen auf Acrylsäure;

Allylmethacrylat: 0,005-1,0 Gew.-% bezogen auf Acrylsäure, bevorzugt 0,1-0,5 Gew.-%, besonders bevorzugt 0.2-0,4 Gew.-%, insbesondere etwa 0,3 Gew.-% bezogen auf Acrylsäure;

2,2'-Azobisamidinopropan-dihydrochlorid: 0-0,2 Gew.-% bezogen auf Acrylsäure, bevorzugt 0,05-0,1 Gew.-%, insbesondere etwa 0,08 Gew.% bezogen auf Acrylsäure;

Kaliumperoxodisulfat: 0.01-0,3 Gew.-% bezogen auf Acrylsäure, bevorzugt 0,1-0,2 Gew.-%, insbesondere etwa 0,167 Gew.% bezogen auf Acrylsäure;

Ascorbinsäure: 0,005-0,03 Gew.-% bezogen auf Acrylsäure, bevorzugt 0,01- 0,02 Gew.-% insbesondere etwa 0,015 Gew.-% bezogen auf Acrylsäure;

Als Vernetzungsmittel können auch andere Vernetzer mit mindestens 2 ethylenisch ungesättigten Doppelbindungen verwendet werden, wie z.B. ETMPTA (ethoxiliertes Trimethylolpropantriacrylat ( LAROMER®-LR 9015 X der BASF AG ) oder Polyethylenglykol-400-diacrylat) : 0,2-0,5 Gew.-% bezogen auf Acrylsäure; entscheidend ist, dass in etwa der gleiche Vernetzungsgrad erreicht wird.

Als Initiator können auch andere analog wirkende Systeme oder Einzelkomponenten verwendet werden. Bei Strahlungsinitiation müssen entsprechende Strahlungsinitiatoren verwendet werden.
Temperaturmaximum bei Polymerisation: 70-100°C, insbesondere etwa 90 °C;
Das erhaltene Gel 2 wird durch Trocknung in das Basepolymer 2 überführt.
Trocknungstemperatur Gel: 120-200 °C, bevorzugt 130-150 C, insbesondere etwa 135 °C.

Base Polymer 3:

Acrylsäure: 25-40 Gew.-% bezogen auf Ansatzgröße, bevorzugt 28-35 Gew%, insbesondere etwa 30 Gew.-% bezogen auf Ansatzgröße;

LiOH x $H_2O$: 15-30 Gew-% bezogen auf Acrylsäure, bevorzugt 17 bis 25 Gew%, besonders bevorzugt 19 bis 23 Gew%, insbesondere etwa 20.4 Gew-% bezogen auf Acrylsäure, eine entsprechende Neutralisation kann auch mit anderen Neutralisationsmitteln erreicht werden;

Sorbitanmonococoat: 0 bis zu 0,15 Gew.% bezogen auf Acrylsäure, bevorzugt 0.02-0,1 Gew.-%, insbesondere etwa 0,065 Gew.-% bezogen auf Acrylsäure;

Allylmethacrylat: 0,005-1,0 Gew.-% bezogen auf Acrylsäure, bevorzugt 0,1-0,6 Gew.-%, besonders bevorzugt 0.3-0,5 Gew.-%, insbesondere etwa 0,4 Gew.-% bezogen auf Acrylsäure;

2,2'-Azobisamidinopropan-dihydrochlorid: 0-0,2 Gew.-% bezogen auf Acrylsäure, bevorzugt 0,05-0,1 Gew.-%, insbesondere etwa 0,08 Gew.% bezogen auf Acrylsäure;

Kaliumperoxodisulfat: 0.01-0,3 Gew.-% bezogen auf Acrylsäure, bevorzugt 0,1-0,2 Gew.-%, insbesondere etwa

0,167 Gew.% bezogen auf Acrylsäure;

Ascorbinsäure: 0,005-0,03 Gew.-% bezogen auf Acrylsäure, bevorzugt 0,01- 0,02 Gew.-% insbesondere etwa 0,015 Gew.-% bezogen auf Acrylsäure;

Als Vernetzungsmittel können auch andere Vernetzer mit mindestens 2 ethylenisch ungesättigten Doppelbindungen verwendet werden, wie z.B. ETMPTA (ethoxiliertes Trimethylolpropantriacrylat ( LAROMER® LR 9015 X der BASF AG ) oder Polyethylenglykol-400-diacrylat) : 0,2-0,5 Gew.-% bezogen auf Acrylsäure; entscheidend ist, dass in etwa der gleiche Vernetzungsgrad erreicht wird.
Als Initiator können auch andere analog wirkende Systeme oder Einzelkomponenten verwendet werden. Bei Strahlungsinitiation müssen entsprechende Strahlungsinitiatoren verwendet werden.
Temperaturmaximum bei Polymerisation: 70-100°C, insbesondere etwa 90°C;
Das erhaltene Gel 3 wird durch Trocknung in das Basepolymer 3 überführt.
Trocknungstemperatur Gel: 120-200 °C, bevorzugt 130-150 °C, insbesondere etwa 140 °C.

Base Polymer 4:

Acrylsäure: 15-28 Gew.-% bezogen auf Ansatzgröße, bevorzugt 18-24 Gew.-%, insbesondere etwa 21 Gew.-% bezogen auf Ansatzgröße;

$NaHCO_3$: 35-55 Gew-% bezogen auf Acrylsäure, bevorzugt 40 bis 50 Gew%, besonders bevorzugt 43 bis 46 Gew%, insbesondere etwa 44.5 Gew-% bezogen auf Acrylsäure, eine entsprechende Neutralisation kann auch mit anderen Neutralisationsmitteln erreicht werden;

2-Acrylamido-2-methyl-propansulfonsäure: 30-55 Gew-% bezogen auf Acrylsäure, bevorzugt 35 bis 50 Gew%, besonders bevorzugt 41 bis 45 Gew%, insbesondere etwa 43 Gew-% bezogen auf Acrylsäure;

Sorbitanmonococoat: 0 bis zu 0,15 Gew.% bezogen auf Acrylsäure, bevorzugt 0.02-0,1 Gew.-%, insbesondere etwa 0,065 Gew.-% bezogen auf Acrylsäure;

Allylmethacrylat: 0,005-1,0 Gew.-% bezogen auf Acrylsäure, bevorzugt 0,1-0,6 Gew.-%, besonders bevorzugt 0.3-0,5 Gew.-%, insbesondere etwa 0,4 Gew.-% bezogen auf Acrylsäure;

2,2-Azobisamidinopropan-dihydrochlorid; 0-0,2 Gew.-% bezogen auf Acrylsäure, bevorzugt 0,05-0,1 Gew.-%, insbesondere etwa 0,08 Gew.% bezogen auf Acrylsäure;

Kaliumperoxodisulfat: 0.01-0,3 Gew.-% bezogen auf Acrylsäure, bevorzugt 0,1-0,2 Gew.-%, insbesondere etwa 0,167 Gew.% bezogen auf Acrylsäure;

Ascorbinsäure: 0,005-0,03 Gew.-% bezogen auf Acrylsäure, bevorzugt 0,01- 0,02 Gew.-% insbesondere etwa 0,015 Gew.-% bezogen auf Acrylsäure;

Als Vernetzungsmittel können auch andere Vernetzer mit mindestens 2 ethylenisch ungesättigten Doppelbindungen verwendet werden, wie z.B. ETMPTA (ethoxiliertes Trimethylolpropantriacrylat ( LAROMER® LR 9015 X der BASF AG ) oder Polyethylenglykol-400-diacrylat) : 0,2-0,5 Gew.-% bezogen auf Acrylsäure; entscheidend ist, dass in etwa der gleiche Vernetzungsgrad erreicht wird.
Als Initiator können auch andere analog wirkende Systeme oder Einzelkomponenten verwendet werden. Bei Strahlungsinitiation müssen entsprechende Strahlungsinitiatoren verwendet werden.
Temperaturmaximum bei Polymerisation: 70-100°C, insbesondere etwa 90°C;
Das erhaltene Gel 4 wird durch Trocknung in das Basepolymer 4 überführt.
Trocknungstemperatur Gel: 120-200 °C, bevorzugt 130-150 C, insbesondere etwa 140 °C.

Base Polymer 5:

Acrylsäure: 20-35 Gew.-% bezogen auf Ansatzgröße, bevorzugt 24-28 Gew%, insbesondere etwa 26 Gew.-% bezogen auf Ansatzgröße;

NaOH 50 %ig: 30-60 Mol-% bezogen auf Acrylsäure, bevorzugt 40 bis 55 Mol%, besonders bevorzugt 44 bis 51 Mol%, insbesondere etwa 45 oder 50 Mol-% bezogen auf Acrylsäure, eine entsprechende Neutralisation kann auch mit anderen Neutralisationsmitteln erreicht werden;

ETMPTA: 0,005-1,0 Gew.-% bezogen auf Acrylsäure, bevorzugt 0,01-0,4 Gew.-%, besonders bevorzugt 0.03-0,2 Gew.-%, insbesondere etwa 0,06 Gew.-% bezogen auf Acrylsäure;

Natriumpersulfat: 0,2-0,4 Gew.-% bezogen auf Acrylsäure, bevorzugt 0,25-0,35 Gew.-%, insbesondere etwa 0,28 Gew.% bezogen auf Acrylsäure;

Photoinitiatoren Darocur 1173 : Irgacure 651 (2:1 Verhältnis) : 0, 005-0,1 Gew. -% bezogen auf Acrylsäure, bevorzugt 0,01- 0,05 Gew.-% insbesondere etwa 0,024 Gew.-% bezogen auf Acrylsäure;

Als Vernetzungsmittel können auch andere Vernetzer mit mindestens 2 ethylenisch ungesättigten Doppelbindungen verwendet werden; entscheidend ist, dass in etwa der gleiche Vernetzungsgrad erreicht wird.

Als Initiator können auch andere analog wirkende Systeme oder Einzelkomponenten verwendet werden, bei dem oben angegeben System wird bevorzugt mit einer UV Lampe initiiert. Bei thermischer Initiation müssen entsprechende Initiatorsysteme verwendet werden.

Das erhaltene Gel kann vor Trocknung optional noch mit 0-0.1 Gew-%, bevorzugt 0.01-0.05 Gew% insbesondere etwa 0.026 Gew% Natriummetabisulphit und mit 0-0.1 Gew-%, bevorzugt 0.01-0.05 Gew% insbesondere etwa 0.02 Gew% Sorbitanmonolaureat zusätzlich optional behandelt werden.

Das erhaltene Gel 5 wird durch Trocknung in das Basepolymer 5 überführt.

Trocknungstemperatur Gel: 120-200 °C, bevorzugt 130-150 C, insbesondere etwa 145 °C.

Base Polymer 6:

Acrylsäure: 25-40 Gew.-% bezogen auf Ansatzgröße, bevorzugt 28-35 Gew%, insbesondere etwa 30 Gew.-% bezogen auf Ansatzgröße;

NaOH 50 %ig: 30-60 Mol-% bezogen auf Acrylsäure, bevorzugt 40 bis 55 Mol%, besonders bevorzugt 48 bis 52 Mol%, insbesondere etwa 50 Mol-% bezogen auf Acrylsäure, eine entsprechende Neutralisation kann auch mit anderen Neutralisationsmitteln erreicht werden;

Polyethylenglykol-400-diacrylat: 0,005-1,1 Gew.-% bezogen auf Acrylsäure, bevorzugt 0,1-1,0 Gew.-%, besonders bevorzugt 0,3-0,6 Gew. -%, insbesondere etwa 0,45 Gew.-% bezogen auf Acrylsäure;

Natriumpersulfat: 0,2-0,4 Gew.-% bezogen auf Acrylsäure, bevorzugt 0,25-0,35 Gew.-%, insbesondere etwa 0,29 Gew.% bezogen auf Acrylsäure;

Ascorbinsäure: 0,005-0,01 Gew.-% bezogen auf Acrylsäure, bevorzugt 0,006-0,008 Gew.-% insbesondere etwa 0,007 Gew.-% bezogen auf Acrylsäure;

Sorbitanmonococoat: 0 bis zu 0,1 Gew.% bezogen auf Acrylsäure; insbesondere etwa 0,08 Gew.-% bezogen auf Acrylsäure.

Als Vernetzungsmittel können auch andere Vernetzer mit mindestens 2 ethylenisch ungesättigten Doppelbindungen verwendet werden, wie z.B. ETMPTA (ethoxiliertes Trimethylolpropantriacrylat ( LAROMER® LR 9015 X der BASF AG ) an Stelle des Polyethylenglykol-400-diacrylat) : 0,2-0,5 Gew.-% bezogen auf Acrylsäure; entscheidend ist, dass in etwa der gleiche Vernetzungsgrad erreicht wird.

Als Initiator können auch andere analog wirkende Systeme oder Einzelkomponenten verwendet werden. Bei Strahlungsinitiation müssen entsprechende Strahlungsinitiatoren verwendet werden.

Temperatur bei Polymerisationsstart: 15-35°C, insbesondere etwa 25 °C;

Das erhaltene Gel 6 wird durch Trocknung in das Basepolymer 6 überführt.

Trocknungstemperatur Gel: 120-200 °C, bevorzugt 140-180 C, insbesondere etwa 160 °C.

Sowohl die Gele 1-6, als auch die Basepolymere 1-6 sind wichtige Zwischenprodukte für die Herstellung der erfindungsgemäßen wässrigen Flüssigkeiten absorbierenden Hydrogelformenden Polymere. Die in den Ansprüchen genannten Gele und Basepolymere sind bevorzugt.

Insbesondere bevorzugt ist ein Gel hergestellt durch Polymerisation teilneutralisierter Acrylsäure mit einem Vernetzungsmittel, wobei

(i) die Teilneutralisierung bewirkt werden kann durch NaOH 50 %ig: 20-30 Mol-% bezogen auf Acrylsäure, bevorzugt 22-29 Mol-%, mehr bevorzugt 23 bis 28 Mol-%, besonders bevorzugt 24 bis 27 Mol-%, insbesondere etwa 25,2 Mol-% bezogen auf Acrylsäure, eine entsprechende Neutralisation kann auch mit anderen Neutralisationsmitteln erreicht werden,
die Vernetzung bewirkt werden kann durch Polyethylenglykol-400-diacrylat: 0,005-1,0 Gew.-% bezogen auf Acrylsäure, bevorzugt 0,1-0,4 Gew.-%, besonders bevorzugt 0,15-0,25 Gew.-%, insbesondere etwa 0,2 Gew.-% bezogen auf Acrylsäure;
oder einen anderen Vernetzer, der den gleichen Vernetzungsgrad ergibt,
oder

(ii) die Teilneutralisation bewirkt werden kann durch $NaHCO_3$ 23-28 Gew.-% bezogen auf Acrylsäure, bevorzugt 27 bis 35 Gew.-%, besonders bevorzugt 30 bis 33 Gew.-%, insbesondere etwa 31,5 Gew.-% bezogen auf Acrylsäure, eine entsprechende Neutralisation kann auch mit anderen Neutralisationsmitteln erreicht werden,
die Vernetzung bewirkt werden kann durch Allylmethacrylat: 0,005-1,0 Gew.-% bezogen auf Acrylsäure, bevorzugt 0,1-0,5 Gew.-%, besonders bevorzugt 0,2-0,4 Gew.-%, insbesondere etwa 0,3 Gew.-% bezogen auf Acrylsäure;
oder einen anderen Vernetzer der den gleichen Vernetzungsgrad ergibt,
oder

(iii) die Teilneutralisation bewirkt werden kann durch LiOH x $H_2O$: 15-30 Gew.-% bezogen auf Acrylsäure, bevorzugt 17 bis 25 Gew.-%, besonders bevorzugt 19 bis 23 Gew.-%, insbesondere etwa 20,4 Gew.-% bezogen auf Acrylsäure, eine entsprechende Neutralisation kann auch mit anderen Neutralisationsmitteln erreicht werden,
die Vernetzung bewirkt werden kann durch Allylmethacrylat: 0,005-1,0 Gew.-% bezogen auf Acrylsäure, bevorzugt 0,1-0,6 Gew.-%, besonders bevorzugt 0,3-0,5 Gew.-%, insbesondere etwa 0,4 Gew.-% bezogen auf Acrylsäure;
oder einen anderen Vernetzer, der den gleichen Vernetzungsgrad ergibt,
oder

(iv) die Teilneutralisation bewirkt werden kann durch $NaHCO_3$: 35-55 Gew.-% bezogen auf Acrylsäure, bevorzugt 40 bis 50 Gew.-%, besonders bevorzugt 43 bis 46 Gew.-%, insbesondere etwa 44,5 Gew.-% bezogen auf Acrylsäure, eine entsprechende Neutralisation kann auch mit anderen Neutralisationsmitteln erreicht werden, wenn
2-Acrylamido-2-methyl-propansulfonsäure zu 30-55 Gew.-% bezogen auf Acrylsäure, bevorzugt 35 bis 50 Gew.-%, besonders bevorzugt 41 bis 45 Gew.-%, insbesondere etwa 43 Gew.-% bezogen auf Acrylsäure zusätzlich zu Acrylsäure vorliegt,
die Vernetzung bewirkt werden kann durch Allylmethacrylat: 0,005-1,0 Gew.-% bezogen auf Acrylsäure, bevorzugt 0,1-0,6 Gew.-%, besonders bevorzugt 0,3-0,5 Gew.-%, insbesondere etwa 0,4 Gew.-% bezogen auf Acrylsäure,
oder einen anderen Vernetzer, der den gleichen Vernetzungsgrad ergibt
oder

(v) die Teilneutralisation bewirkt werden kann durch NaOH 50 %ig: 30-60 Mol-% bezogen auf Acrylsäure, bevorzugt 40 bis 55 Mol-%, besonders bevorzugt 44 bis 51 Mol-%, insbesondere etwa 45 oder 50 Mol-% bezogen auf Acrylsäure, eine entsprechende Neutralisation kann auch mit anderen Neutralisationsmitteln erreicht werden,
die Vernetzung bewirkt werden kann durch ETMPTA: 0,005-1,0 Gew.-% bezogen auf Acrylsäure, bevorzugt 0,1-0,4 Gew.-%, besonders bevorzugt 0,03-0,2 Gew.-%, insbesondere etwa 0,06 Gew.-% bezogen auf Acrylsäure; oder einen anderen Vernetzer, der den gleichen Vernetzergrad ergibt,
oder

(vi) die Teilneutralisation bewirkt werden kann durch NaOH 50 %ig: 30-60 Mol-% bezogen auf Acrylsäure, bevorzugt 40 bis 55 Mol-%, besonders bevorzugt 48 bis 52 Mol-%, insbesondere etwa 50 Mol-% bezogen auf Acrylsäure, eine entsprechende Neutralisation kann auch mit anderen Neutralisationsmitteln erreicht werden,
die Vernetzung bewirkt werden kann durch Polyethylenglykol-400-diacrylat: 0,005-1,1 Gew.-% bezogen auf Acrylsäure, bevorzugt 0,1-1,0 Gew.-%, besonders bevorzugt 0,3-0,6 Gew.-%, insbesondere etwa 45 Gew.-% bezogen auf Acrylsäure, oder einen anderen Vernetzer, der den gleichen Vernetzungsgrad ergibt.

Die oben genannten Gele werden durch Trocknung bei 120°C - 200°C in die erfindungsgemäßen base Polymere überführt. Der Wassergehalt ist dann bevorzugt unter 5 Gew.-%, insbesondere unter 3 Gew.-%. Die base Polymere können durch die unten angegebenen bevorzugten Oberflächennachvernetzungsbedingungen in die entsprechenden Superabsorber überführt werden, wobei die bei den jeweiligen base Polymeren angegebenen Bedingungen für das spezifische base Polymer bevorzugt sind.

a) Oberflächennachvernetzung

Bevorzugt werden Hydrogel-formende Polymere, die oberflächennachvernetzt sind. Die Oberflächennachvernetzung kann in an sich bekannter Weise mit getrockneten, gemahlenen und abgesiebten Polymerpartikeln geschehen.
Hierzu werden Verbindungen, die mit den funktionellen Gruppen der Polymere unter Vernetzung reagieren können, vorzugsweise in Form einer wasserhaltigen Lösung auf die Oberfläche der Hydrogel-Partikel aufgebracht. Die wasserhaltige Lösung kann wassermischbare organische Lösungsmittel enthalten. Geeignete Lösungsmittel sind Alkohole wie Methanol, Ethanol, i-Propanol, Ethylenglycol, Propylenglycol oder Aceton.
Bei der nachträglichen Vernetzung werden Polymere, die durch die Polymerisation der oben genannten monoethylenisch ungesättigten Säuren und gegebenenfalls monoethylenisch ungesättigten Comonomere hergestellt wurden und die ein Molekulargewicht größer 5000, bevorzugt größer 50000 aufweisen, mit Verbindungen umgesetzt, die mindestens zwei gegenüber Säuregruppen reaktive Gruppen aufweisen. Diese Umsetzung kann bei Raumtemperatur oder aber bei erhöhten Temperaturen bis zu 220 °C erfolgen.
Geeignete Nachvernetzungsmittel sind beispielsweise

- Di- oder Polyglycidylverbindungen wie Phosphonsäurediglycidylether oder Ethylenglykoldiglycidylether, Bischlorhydrinether von Polyalkylenglykolen,
- Alkoxysilylverbindungen,
- Polyaziridine, Aziridin-Einheiten enthaltende Verbindungen auf Basis von Polyethern oder substituierten Kohlenwasserstoffen, beispielsweise Bis-N-aziridinomethan,
- Polyamine oder Polyamidoamine sowie deren Umsetzungsprodukte mit Epichlorhydrin,
- Polyole wie Ethylenglykol, 1,2-Propandiol, 1,4-Butandiol, Glycerin, Methyltriglykol, Polyethylenglykole mit einem mittleren Molekulargewicht $M_w$ von 200 - 10000, Di- und Polyglycerin, Pentaerythrit, Sorbit, die Oxethylate dieser Polyole sowie deren Ester mit Carbonsäuren oder der Kohlensäure wie Ethylencarbonat oder Propylencarbonat,
- Kohlensäurederivate wie Harnstoff, Thioharnstoff, Guanidin, Dicyandiamid, 2-Oxazolidinon und dessen Derivate, Bisoxazolin, Polyoxazoline, Di- und Polyisocyanate,
- Di- und Poly-N-methylolverbindungen wie beispielsweise Methylenbis(N-methylol-methacrylamid) oder Melamin-Formaldehyd-Harze,
- Verbindungen mit zwei oder mehr blockierten Isocyanat-Gruppen wie beispielsweise Trimethylhexamethylendiisocyanat blockiert mit 2,2,3,6-Tetramethyl-piperidinon-4.

Bei Bedarf können saure Katalysatoren wie beispielsweise p-Toluolsulfonsäure, Phosphorsäure, Borsäure oder Ammoniumdihydrogenphosphat zugesetzt werden.
Besonders geeignete Nachvernetzungsmittel sind Di- oder Polyglycidylverbindungen wie Ethylenglykoldiglycidylether, die Umsetzungsprodukte von Polyamidoaminen mit Epichlorhydrin und 2-Oxazolidinon.
Das Aufbringen der Vernetzer-Lösung erfolgt bevorzugt durch Aufsprühen einer Lösung des Vernetzers in herkömmlichen Reaktionsmischern oder Misch- und Trocknungsanlagen wie beispielsweise Patterson-Kelly-Mischer, DRAIS-Turbulenzmischer, Lödige-Mischer, Schneckenmischer, Tellermischer, Wirbelschichtmischer und Schugi-Mix. Nach Aufsprühen der Vernetzer-Lösung kann ein Temperaturbehandlungsschritt nachfolgen, bevorzugt in einem nachgeschalteten Trockner, bei einer Temperatur zwischen 80 und 230 °C, bevorzugt 80 - 190 °C, und besonders bevorzugt zwischen 100 und 160 °C, über einen Zeitraum von 5 Minuten bis 6 Stunden, bevorzugt 10 Minuten bis 2 Stunden und besonders bevorzugt 10 Minuten bis 1 Stunde, wobei sowohl Spaltprodukte als auch Lösungsmittelanteile entfernt werden können. Die Trocknung kann aber auch im Mischer selbst erfolgen, durch Beheizung des Mantels oder Einblasen eines vorgewärmten Trägergases.
In einer besonders bevorzugten Ausführung der Erfindung wird zusätzlich die Hydrophilie der Partikeloberfläche der Hydrogel-formenden Polymere durch Ausbildung von Komplexen modifiziert. Die Bildung der Komplexe auf der äußeren Schale der Hydrogel-Partikel erfolgt durch Aufsprühen von Lösungen zwei- oder mehrwertiger Metallsalz-Lösungen, wobei die Metall-Kationen mit den Säuregruppen des Polymers unter Ausbildung von Komplexen reagieren können. Beispiele für zwei- oder mehrwertige Metall-Kationen sind $Mg^{2+}$, $Ca^{2+}$, $Al^{3+}$, $Sc^{3+}$, $Ti^{4+}$, $Mn^{2+}$, $Fe^{2+/3+}$, $Co^{2+}$, $Ni^{2+}$, $Cu^{+/2+}$, $Zn^{2+}$, $Y^{3+}$, $Zr^{4+}$, $Ag^{+}$, $La^{3+}$, $Ce^{4+}$, $Hf^{4+}$, und $Au^{+/3+}$, bevorzugte Metall-Kationen sind $Mg^{2+}$, $Ca^{2+}$, $Al^{3+}$, $Ti^{4+}$, $Zr^{4+}$ und $La^{3+}$, und besonders bevorzugte Metall-Kationen sind $Al^{3+}$, $Ti^{4+}$und $Zr^{4+}$. Die Metall-Kationen können sowohl allein als auch im Gemisch untereinander eingesetzt werden. Von den genannten Metall-Kationen sind alle Metallsalze

geeignet, die eine ausreichende Löslichkeit in dem zu verwendenden Lösungsmittel besitzen. Besonders geeignet sind Metallsalze mit schwach komplexierenden Anionen wie zum Beispiel Chlorid, Nitrat und Sulfat. Als Lösungsmittel für die Metallsalze können Wasser, Alkohole, DMF, DMSO sowie Mischungen dieser Komponenten eingesetzt werden. Besonders bevorzugt sind Wasser und Wasser/Alkohol-Mischungen wie zum Bespiel Wasser/Methanol oder Wasser/1,2-Propandiol.

Das Aufsprühen der Metallsalz-Lösung auf die Partikel des Hydrogel-formenden Polymers kann sowohl vor als auch nach der Oberflächennachvernetzung der Partikel erfolgen. In einem besonders bevorzugten Verfahren erfolgt die Aufsprühung der Metallsalz-Lösung im gleichen Schritt mit dem Aufsprühen der Vernetzer-Lösung, wobei beide Lösungen getrennt nacheinander oder gleichzeitig über zwei Düsen aufgesprüht werden, oder Vernetzer- und Metallsalz-Lösung vereint über eine Düse aufgesprüht werden können.

Optional kann noch eine weitere Modifizierung der Hydrogel-formenden Polymere durch Zumischung feinteiliger anorganischer Feststoffe, wie zum Beispiel Silica, Aluminiumoxid, Titandioxid und Eisen(II)-oxid erfolgen, wodurch die Effekte der Oberflächennachbehandlung noch weiter verstärkt werden. Besonders bevorzugt ist die Zumischung von hydrophilem Silica oder von Aluminiumoxid mit einer mittleren Größe der Primärteilchen von 4 bis 50 nm und einer spezifischen Oberfläche von 50 - 450 $m^2/g$. Die Zumischung feinteiliger anorganischer Feststoffe erfolgt bevorzugt nach der Oberflächenmodifizierung durch Vernetzung/Komplexbildung, kann aber auch vor oder während diesen Oberflächenmodifizierungen durchgeführt werden.

Die folgende Auflistung bezieht sich auf besonders bevorzugte Nachvernetzungsbedingungen von erfindungsgemäßen getrockneten Gelen, insbesondere von Base Polymer 1:

Ethylenglykoldiglycidylether: 0,01-0,12 Gew.-% bezogen auf getrocknetes Gel (Base Polymer), bevorzugt 0,012-0,02 Gew.-%, insbesondere etwa 0,015 Gew.-% bezogen auf Base Polymer;

Wasser: 1,5-5 Gew.-% bezogen auf Base Polymer, bevorzugt 1,6 - 2 Gew.%, insbesondere etwa 1,67 Gew.-% bezogen auf Base Polymer;

Sorbitanmonococoat: 0-0,1 Gew.-% bezogen auf Base Polymer, bevorzugt 0.03 - 0.07 Gew.-%, insbesondere etwa 0,05 Gew.-% bezogen auf Base Polymer;

Temperung, Mantel-Temperatur: 120-180 °C, bevorzugt 140-160 °C, insbesondere 150 °C; Temperung, Verweilzeit muss an die Temperatur angepasst werden, wobei bei höheren Temperaturen kürzere Verweilzeiten vorliegen und bei längeren Verweilzeiten stärkere Nachvernetzung vorliegt. Typische Werte sind 150-10 Minuten, insbesondere etwa 120 Minuten.

Ethylenglykoldiglycidylether: 0,01-0,12 Gew.-% bezogen auf getrocknetes Gel (Base Polymer), bevorzugt 0,08-0,11 Gew.-%, insbesondere etwa 0,10 Gew.-% bezogen auf Base Polymer;

Wasser: 0,5-5 Gew.-% bezogen auf Base Polymer, bevorzugt 1-2 Gew.%, insbesondere etwa 1,5 Gew.-% bezogen auf Base Polymer;

Propandiol-1,2: 0-3,5 Gew.-% bezogen auf Base Polymer, bevorzugt 0.5 - 1,5 Gew.-%, insbesondere etwa 0,8 Gew.-% bezogen auf Base Polymer;

Aluminiumsulfat (z.B. als 26,8 %ige Lösung): 0-0,15 Gew.-% bezogen auf Base Polymer, bevorzugt 0.03 - 0,10 Gew.-%, insbesondere etwa 0,075 Gew.-% bezogen auf Base Polymer;

Temperung, Mantel-Temperatur: 120-180 °C, bevorzugt 140-160 °C, insbesondere 150 °C; Temperung, Verweilzeit muss an die Temperatur angepasst werden, wobei bei höheren Temperaturen kürzere Verweilzeiten vorliegen und bei längeren Verweilzeiten stärkere Nachvernetzung vorliegt. Typische Werte sind 150-10 Minuten, insbesondere etwa 120 Minuten.

Ethylenglykoldiglycidylether:-0,01-0,12 Gew.-% bezogen auf getrocknetes Gel (Base Polymer), bevorzugt 0,08-0,11 Gew.-%, insbesondere etwa 0,10 Gew.-% bezogen auf Base Polymer;

Wasser: 0,5-5 Gew.-% bezogen auf Base Polymer, bevorzugt 1 - 2 Gew.%, insbesondere etwa 1,67 Gew.-% bezogen auf Base Polymer;

Temperung, Mantel-Temperatur: 120-180 °C, bevorzugt 140-160 °C, insbesondere 150 °C; Temperung, Verweilzeit muss an die Temperatur angepasst werden, wobei bei höheren Temperaturen kürzere Verweilzeiten vorliegen und bei längeren Verweilzeiten stärkere Nachvernetzung vorliegt. Typische Werte sind 150-10 Minuten, insbesondere etwa 15 Minuten.

Je länger die Nachvernetzung durchgeführt wird, umso höher wird AUL, allerdings wird die CRC etwas niedriger.

Die folgende Auflistung bezieht sich auf besonders bevorzugte Nachvernetzungsbedingungen von erfindungsgemäßen getrockneten Gelen, insbesondere von Base Polymer 2:

Oxazolidinon: 0,005-0,1 Gew.-% bezogen auf getrocknetes Gel (Base Polymer), bevorzugt 0,01-0,05 Gew.-%, insbesondere etwa 0,025 Gew.-% bezogen auf Base Polymer;

Wasser: 0,5-5 Gew.-% bezogen auf Base Polymer, bevorzugt 1-3 Gew.%, insbesondere etwa 2 Gew.-% bezogen auf Base Polymer;

Propandiol-1,2: 0-4 Gew.-% bezogen auf Base Polymer, bevorzugt 0.5-3 Gew.-%, insbesondere etwa 2 Gew.-% bezogen auf Base Polymer;

Aluminiumsulfat x $8H_2O$: 0-0,3 Gew.-% bezogen auf Base Polymer, bevorzugt 0.03 - 0,10 Gew.-%, insbesondere etwa 0,05 Gew.-% bezogen auf Base Polymer;

Temperung, Mantel-Temperatur: 120-180 °C, bevorzugt 140-160 °C, insbesondere 150 °C; Temperung, Verweilzeit muss an die Temperatur angepasst werden, wobei bei höheren Temperaturen kürzere Verweilzeiten vorliegen und bei längeren Verweilzeiten stärkere Nachvernetzung vorliegt. Typische Werte sind 150-10 Minuten, bevorzugt 90 - 20 Minuten, insbesondere etwa 30, 60 oder 70 Minuten.

Die folgende Auflistung bezieht sich auf besonders bevorzugte Nachvernetzungsbedingungen von erfindungsgemäßen getrockneten Gelen, insbesondere von Base Polymer 3:

Ethylenglykoldiglycidylether: 0,005-0,12 -Gew.-% bezogen auf getrocknetes Gel (Base Polymer), bevorzugt 0,01-0,05 Gew.-%, insbesondere etwa 0,03 Gew.-% bezogen auf Base Polymer;

Wasser: 0,5-5 Gew.-% bezogen auf Base Polymer, bevorzugt 2 - 4 Gew.%, insbesondere etwa 3.35 Gew.-% bezogen auf Base Polymer;

Propandiol-1,2 : 0-4 Gew.-% bezogen auf Base Polymer, bevorzugt 0.5 - 3 Gew.-%, insbesondere etwa 1.6 Gew.-% bezogen auf Base Polymer;

Aluminiumsulfat: 0-0,3 Gew.-% bezogen auf Base Polymer, bevorzugt 0.05 - 0,10 Gew.-%, insbesondere etwa 0,075 Gew.-% bezogen auf Base Polymer;

Temperung, Umlufttrockenschrank-Temperatur: 80-180 °C, bevorzugt 90-120 °C, insbesondere etwa 100 °C; Temperung, Verweilzeit muss an die Temperatur angepasst werden, wobei bei höheren Temperaturen kürzere Verweilzeiten vorliegen und bei längeren Verweilzeiten stärkere Nachvernetzung vorliegt. Typische Werte sind 180-20 Minuten, bevorzugt 150 - 90 Minuten, insbesondere etwa 120 Minuten.

Die folgende Auflistung bezieht sich auf besonders bevorzugte Nachvernetzungsbedingungen von erfindungsgemäßen getrockneten Gelen, insbesondere von Base Polymer 4:

Ethylenglykoldiglycidylether: 0,005-0,3 Gew.-% bezogen auf getrocknetes Gel (Base Polymer), bevorzugt 0,05-0,1 Gew.-%, insbesondere etwa 0,075 Gew.-% bezogen auf Base Polymer oder bevorzugt 0,1-0,3 Gew.-%, insbesondere etwa 0,2 Gew.-% bezogen auf Base Polymer;

Wasser: 0,5-5 Gew.-% bezogen auf Base Polymer, bevorzugt 1 - 3 Gew.%, insbesondere etwa 2 Gew.-% oder 2,3 Gew.-% bezogen auf Base Polymer;

Propandiol-1,2: 0-4 Gew.-% bezogen auf Base Polymer, bevorzugt 1 - 3 Gew.-%, insbesondere etwa 2 Gew.-% oder 1,2 Gew.-% bezogen auf Base Polymer;

Aluminiumsulfat: 0-0,3 Gew.-% bezogen auf Base Polymer, bevorzugt 0.05 - 0,10 Gew.-%, insbesondere etwa 0,075 Gew.-% bezogen auf Base Polymer;

Temperung, Umlufttrockenschrank-Temperatur: 80-180 °C, bevorzugt 100-160 °C, insbesondere etwa 140 °C; Temperung, Verweilzeit muss an die Temperatur angepasst werden, wobei bei höheren Temperaturen kürzere Verweilzeiten vorliegen und bei längeren Verweilzeiten stärkere Nachvernetzung vorliegt. Typische Werte sind 180-20 Minuten, bevorzugt 150 - 90 Minuten, insbesondere etwa 120 Minuten.

Die folgende Auflistung bezieht sich auf besonders bevorzugte Nachvernetzungsbedingungen von erfindungsgemäßen getrockneten Gelen, insbesondere von Base Polymer 5:

Ethylenglykoldiglycidylether: 0,005-0,2 Gew.-% bezogen auf getrocknetes Gel (Base Polymer), bevorzugt 0,03-0,1 Gew.-%, insbesondere etwa 0,06 Gew.-% bezogen auf Base Polymer;

Wasser: 0,5-5 Gew.-% bezogen auf Base Polymer, bevorzugt 1-3 Gew.%, insbesondere etwa 2,5 Gew.-% bezogen auf Base Polymer;

Propandiol-1,2: 0-4 Gew.-% bezogen auf Base Polymer, bevorzugt 0.5 - 3 Gew.-%, insbesondere etwa 1.5 Gew.-% bezogen auf Base Polymer;

Temperung, Umlufttrockenschrank-Temperatur: 80-180 °C, bevorzugt 100-160 °C, insbesondere etwa 145 °C; Temperung, Verweilzeit muss an die Temperatur angepasst werden, wobei bei höheren Temperaturen kürzere Verweilzeiten vorliegen und bei längeren Verweilzeiten stärkere Nachvernetzung vorliegt. Typische Werte sind 180-20 Minuten, bevorzugt 90 - 30 Minuten, insbesondere etwa 60 Minuten.

Die folgende Auflistung bezieht sich auf besonders bevorzugte Nachvernetzungsbedingungen von erfindungsgemäßen getrockneten Gelen, insbesondere von Base Polymer 6:

Ethylenglykoldiglycidylether: 0,01-0,12 Gew.-% bezogen auf getrocknetes Gel (Base Polymer), bevorzugt 0,04-0,08 Gew.-%, insbesondere etwa 0,06 Gew.-% bezogen auf Base Polymer;

Wasser: 0,5-5 Gew.-% bezogen auf Base Polymer, bevorzugt 2 - 4 Gew.%, insbesondere etwa 3,2 Gew.-% bezogen auf Base Polymer;

Propandiol-1,2: 0-4 Gew.-% bezogen auf Base Polymer, bevorzugt 2 Gew.-%, insbesondere etwa 1,6 Gew.-% bezogen auf Base Polymer 2;

Temperung, Mantel-Temperatur: 120-180 °C, bevorzugt 140-160 °C, insbesondere 150°C; Temperung, Verweilzeit muss an die Temperatur angepasst werden, wobei bei höheren Temperaturen kürzere Verweilzeiten vorliegen und bei längeren Verweilzeiten stärkere Nachvernetzung vorliegt. Typische Werte sind 150-10 Minuten, insbesondere etwa 120 Minuten.

Je länger die Nachvernetzung durchgeführt wird, umso höher wird AUL, allerdings wird die CRC etwas niedriger.

Eigenschaften der erfindungsgemäßen saure Hydrogel-formender Polymere

Die erfindungsgemäßen wässrige Flüssigkeiten absorbierenden sauren Hydrogel-formenden Polymere weisen im Allgemeinen eine Teilchengrößenverteilung von 10 μm bis etwa 1000 μm, bevorzugt etwa 100 μm bis etwa 850 μm, insbesondere 150 μm bis etwa 700 μm. In den genannten Größenfenster liegen bevorzugt mehr als 80 Gew.-%, insbesondere mehr wie 90 Gew.-% der Teilchen.

Die erfindungsgemäßen wässrige Flüssigkeiten absorbierenden sauren Hydrogel-formenden Polymere weisen bei hohem Endabsorptionsvermögen, hoher Gelfestigkeit und Permeabilität, sowie hoher Retention verbesserte Geruchsbindungseigenschaften auf. Durch das Vorliegen saurer Hydrogel-formender Polymerer weisen die erfindungsgemäßen Produkte antimikrobielle Eigenschaften auf, so dass damit ein Geruchskontrollsystem zugrunde liegt, ohne dass es des Zusatzes geruchsinhibierender Substanzen oder geruchsmaskierender Materialien bedarf.

Im Gegensatz zum Stand der Technik, nach dem eine zugesetzte Geruchskontrolleinheit zum Einsatz von hochquellfähigen Polymeren auf dem Hygienesektor unverzichtbar ist, kann bei den erfindungsgemäßen Produkten eine weitaus kostengünstigere Herstellung erfolgen, da neben der Geruchskontrolleinheit auch auf Bindemittel oder sonstige Anbindungshilfen von Geruchskontrolleinheit an Hydrogel-formende Polymere verzichtet werden kann.

Die Verringerung oder bevorzugt der Verzicht auf Zusätze zum Zweck der Geruchskontrolle bedingt eine unverändert hohe Absorptionsleistung und ein unverändert hervorragendes Absorptionsverhalten des eingesetzten Hydrogel-formenden Polymermaterials. Dies wiederum ermöglicht längere Tragezeiten bei Einsatz der erfindungsgemäßen Produkte im Hygieneartikel. Hautreizungen und Hautirritationen werden durch ein gleichbleibendes pH-Milieu vollständig vermieden und ausgeschlossen.

Der pH-Wert der erfindungsgemäßen Hydrogel-formenden Polymere kann nach den in der Beschreibung angegebenen Methoden gemessen werden und liegt bei 5,7 oder weniger, insbesondere bei 5,6 5,5 5,4 5,3 5,2 oder 5,1

und weniger, bevorzugt bei 5,0 insbesondere bei 4,9 4,8 4,7 4,6 und weniger, besonders bevorzugt bei 4,5 die Untergrenze liegt besonders bevorzugt bei 4,4 insbesondere bei 4, 3 4,2 oder 4,1, bevorzugt bei 4,0 insbesondere 3,9 3,8 3,7 3,6 3,5 3,4 3,3 3,2 3,1 oder 3,0 bevorzugt sind Kombinationen der Ober- und Untergrenzen, wie z.B. pH-Werte zwischen 3 und 5,7, bevorzugt zwischen 4 und 5,5, insbesondere bevorzugt zwischen 4,4 und 4,6 oder 5,1 bis 5,3.

Der SFC-Wert [in $10^{-7}$ cm3s/g] der erfindungsgemäßen Hydrogel-formenden Polymere kann nach den in der Beschreibung angegebenen Methoden gemessen werden und liegt bevorzugt größer 1, insbesondere 2, 4, 6, 8, 10, 12, 14, 16, 18, 20 oder höher, besonders bevorzugt bei 22 insbesondere bei 24, 26, 28, 30, 32 oder höher.

Der CRC-Wert [g/g] der erfindungsgemäßen Hydrogel-formenden Polymere kann nach den in der Beschreibung angegebenen Methoden gemessen werden und liegt bevorzugt größer 15, insbesondere 16, 18, 20 22, 24, oder höher, besonders bevorzugt bei 25 insbesondere bei 26, 27, 28, 29, 30, 31, 32 oder höher.

Der AUL-0.7psi-Wert [g/g] der erfindungsgemäßen Hydrogel-formenden Polymere kann nach den in der Beschreibung angegebenen Methoden gemessen werden und liegt bevorzugt größer 4, insbesondere 6, 8, 10, 12, oder höher, besonders bevorzugt bei 13 insbesondere bei 14, 15, 16, 17, 18, 19, 20, 21, 22, 23, 24, 25, 26, 27, 28, oder höher.

Der $pH_{Al}$-Wert der erfindungsgemäßen Hydrogel-formenden Polymere kann nach den in der Beschreibung angegebenen Methoden gemessen und errechnet werden und liegt mindestens bei 80 oder höher, insbesondere bei 81, 82, 83, 84, 85, 86, 87, 88, 90 oder höher, bevorzugt größer 91, insbesondere 92, 93, 94, 95, 96, 97, 98, 99, 100, 101, 102, 103, 104, 105, 106, 107, 108, 109, 110, 111, 112, 113, 114, 115, 116, 117 118, 119, 120 oder höher.

Der Nessler-Wert (gemessen als $N_2$ aus $NH_3$ in mg/l verglichen mit dem $N_2$ aus $NH_3$ von Beispiel 9. Der $N_2$-Wert von Beispiel 9 wird gleich 100 % gesetzt. Der erfindungsgemäßen Hydrogel-formenden Polymere kann nach den in der Beschreibung angegebenen Methoden gemessen und errechnet werden und liegt höchsten 65% oder weniger, insbesondere bei 60, 55, 50 % des Wertes von HySorb C 7015® oder weniger , bevorzugt weniger 45 %, insbesondere 40, 39, 38, 37, 36, 35-, 34 33, 32, 31, 30, 29, 28, 27, 26, 25, 24, 23 22, 21, 20 % oder weniger.

Besonders bevorzugt ist eine Kombination der Schwellenwerte, wie z.B. $pH_{Al}$ mit pH, $pH_{Al}$ mit SFC, $pH_{Al}$ mit CRC, $pH_{Al}$ mit AUL, $pH_{Al}$ mit Nessler, insbesondere Dreier Kombinationen wie $pH_{Al}$ mit pH und SFC, $pH_{Al}$ mit pH und CRC, $pH_{Al}$ mit pH und AUL, $pH_{Al}$ mit Nessler und SFC, $pH_{Al}$ mit Nessler und CRC, $pH_{Al}$ mit Nessler und AUL.

Einsatz und Verwendung saurer Hydrogel-formender Polymerer

Die vorliegende Erfindung betrifft ferner die Verwendung der oben genannten Hydrogel-formenden Polymeren in Hygieneartikel, umfassend

(A) eine obere flüssigkeitsdurchlässige Abdeckung
(B) eine untere flüssigkeitsundurchlässige Schicht
(C) einen zwischen (A) und (B) befindlichen Kern, enthaltend 10 - 100 Gew.-% des erfindungsgemäßem Hydrogel-formenden Polymer
0-90 Gew.-% hydrophiles Fasermaterial bevorzugt 20 - 100 Gew.-% des erfindungsgemäßem Hydrogelformenden Polymer, 0 - 80 Gew.-% hydrophiles Fasermaterial
mehr bevorzugt 30 - 100 Gew.-% des erfindungsgemäßem Hydrogel-formenden Polymer, 0-70 Gew.-% hydrophiles Fasermaterial
noch mehr bevorzugt 40 - 100 Gew.-% des erfindungsgemäßem Hydrogel-formenden Polymer, 0 - 60 Gew.-% hydrophiles Fasermaterial
besser bevorzugt 50 - 100 Gew.-% des erfindungsgemäßem Hydrogel-formenden Polymer 0 - 50 Gew.-% hydrophiles Fasermaterial
besonders bevorzugt 60 - 100 Gew.-% des erfindungsgemäßem Hydrogel-formenden Polymer, 0-40 Gew.-% hydrophiles Fasermaterial
insbesondere bevorzugt 70 - 100 Gew.-% des erfindungsgemäßem Hydrogel-formenden Polymer, 0-30 Gew.-% hydrophiles Fasermaterial
außerordentlich bevorzugt 80 - 100 Gew.-% des erfindungsgemäßem Hydrogel-formenden Polymer, 0-20 Gew.-% hydrophiles Fasermaterial
am meisten bevorzugt 90 - 100 Gew.-% des erfindungsgemäßem Hydrogel-formenden Polymer, 0-10 Gew.-% hydrophiles Fasermaterial
(D) gegebenenfalls eine sich unmittelbar oberhalb und unterhalb des Kerns-(C) sich befindende Tissueschicht und
(E) gegebenenfalls eine zwischen (A) und (C) sich befindende Aufnahmeschicht.

Die Prozentangaben sind so zu verstehen, dass bei 10 - 100 Gew.%, 11, 12, 13, 14, 15, 16, 17, 18, 19 bis jeweils 100 Gew.-% an erfindungsgemäßem Hydrogel-formenden Polymer und alle dazwischenliegendnen %-Angaben (z.B. 12,2%) möglich sind und entsprechend hydrophiles Fasermaterial von 0 bis jeweils 89, 88, 87, 86, 85, 83, 82, 81 Gew.-% und dazwischen liegende Prozentangaben (z.B. 87,8%) möglich sind. Liegen weitere Materialien im Kern vor,

so verringern sich entsprechend die Prozentwerte an Polymer und Faser. Das ananloge gilt für die bevorzugten Bereiche, so z.B. bei außerordentlich bevorzugt können 81, 82, 83, 84, 85, 86, 87, 88, 89 Gew.% für das erfindungsgemäßem Hydrogel-formenden Polymer und entsprechend 19, 18, 17, 16, 15, 14, 13, 12, 11 Gew-% des Fasermaterials vorliegen. So können im bevorzugten Bereich 20, 21, 22, 23, 24, 25, 26, 27, 28, 29 bis 100 Gew.-% erfindungsgemäßes Hydrogel-formendes Polymer, im mehr bevorzugten Bereich 30, 31, 32, 33, 34, 35, 36, 37, 38, 39 bis 100 Gew.-% erfindungsgemäßes Hydrogel-formendes Polymer, im noch mehr bevorzugten Bereich 40, 41, 42, 43, 44, 45, 46, 47, 48, 49 bis 100 Gew.-% erfindungsgemäßes Hydrogel-formendes Polymer, im besser bevorzugten Bereich 50, 51, 52, 53, 54, 55, 56, 57, 58, 59 bis 100 Gew.-% erfindungsgemäßes Hydrogel-formendes Polymer, im besonders bevorzugten Bereich 60, 61, 62, 63, 64, 65, 66, 67, 68, 69 bis 100 Gew.-% erfindungsgemäßes Hydrogel-formendes Polymer, im insbesonders bevorzugten Bereich 70, 71, 71, 72, 73, 74, 75, 76, 77, 78, 79 bis 100 Gew.-% erfindungsgemäßes Hydrogel-formendes Polymer und im am meisten bevorzugten Bereich 90, 91, 92, 93, 94, 95, 96, 97, 98, 99 oder 100 Gew.-% erfindungsgemäßes Hydrogel-formendes Polymer vorliegen.

Unter Hygieneartikel sind dabei sowohl Inkontinenzeinlagen und Inkontinenzhosen für Erwachsene als auch Windeln für Babys zu verstehen.

Bei der flüssigkeitsdurchlässigen Abdeckung (A) handelt es sich um die Schicht, die direkten Hautkontakt hat. Das Material hierfür besteht hierbei aus üblichen synthetischen oder halbsynthetischen Fasern oder Filme von Polyester, Polyolefine, Rayon oder natürlichen Fasern wie Baumwolle. Bei nichtgewebten Materialien sind die Fasern in der Regel durch Bindemittel wie Polyacrylate zu verbinden. Bevorzugte Materialien sind Polyester, Rayon und deren Blends, Polyethylen und Polypropylen. Beispiele für flüssigkeitsdurchlässige Schichten sind beschrieben in WO 99/57355 A1, EP 102 388 3 A2.

Die flüssigkeitsundurchlässige Schicht (B) besteht in der Regel aus einer Folie aus Polyethylen oder Polypropylen.

Der Kern (C) enthält neben derm erfindungsgemäßen Hydrogel-formendem Polymer hydrophiles Fasermaterial . Unter hydrophil ist zu verstehen, daß sich wäßrige Flüssigkeiten schnell über die Faser verteilen. Für gewöhnlich ist das Fasermaterial Cellulose, modifizierte Cellulose, Rayon, Polyester wie Polyethylenterephthalat. Besonders bevorzugt werden Cellulosefasern wie Zellstoff. Die Fasern haben in der Regel einen Durchmesser von 1 - 200 $\mu$m, bevorzugt 10 - 100 $\mu$m. Darüberhinaus haben die Fasern eine Mindestlänge von 1 mm.

Der Aufbau und die Form von Windeln ist allgemein bekannt und beispielsweise in der WO 95 / 26 209 S. 66 Zeile 34 bis S. 69 Zeile 11, DE 196 04 601 A1, EP-A-0 316 518 und EP-A-0 202 127 beschrieben. Allgemein werden Windeln und andere Hygieneartikel auch in WO 00/65084, insbesondere auf Seiten 6-15, WO 00/65348, insbesondere auf Seiten 4 - 17, WO 00/35502, insbesondere Seiten 3-9, DE 19737434, WO 98/8439 beschrieben. Hygieneartikel für die Damenhygiene werden in folgenden Literaturstellen beschrieben. Die erfindungsgemäßen wäßrige Flüssigkeiten absorbierende Hydrogel-formende Polymere können dort eingestzt werden. Literaturstellen Damenhygiene: WO 95/24173: Absorption Article for Controlling Odour, WO 91/11977: Body Fluid Odour Control, EP 389023: Absorbent Sanitary Articles, WO 94/25077: Odour Control Material, WO 97/01317: Absorbent Hygienic Article, WO 99/18905, EP 834297, US 5,762,644, US 5,895,381, WO 98/57609, WO 2000/065083, WO 2000/069485, WO 2000/069484, WO 2000/069481, US 6,123,693, EP 1104666, WO 2001/024755, WO 2001/000115, EP 105373, WO 2001/041692, EP 1074233. Tampons werden in folgenden Schriften beschrieben: WO 98/48753, WO 98/41179, WO 97/09022, WO 98/46182, WO 98/46181, WO 2001/043679, WO 2001/043680, WO 2000/061052, EP 1108408, WO 2001/033962, DE 200020662, WO 2001/001910, WO 2001/001908, WO 2001/001909, WO 2001/001906, WO 2001/001905, WO 2001/24729. Inkontinenzartikel werden in folgenden Schriften beschrieben: Disposable Absorbent Article for Incontinent Individuals: EP 311344 Beschreibung S. 3 - 9; Disposable Absorbent Article: EP 850623; Absorbent Article: WO 95/26207; Absorbent Article: EP 894502; Dry Laid Fibrous Structure: EP 850 616; WO 98/22063; WO 97/49365; EP 903134; EP 887060; EP 887059; EP 887058; EP 887057; EP 887056; EP 931530; WO 99/25284; WO 98/48753. Damenhygiene- und Inkontinenzartikel wird in folgenden Schriften beschrieben: Catamenial Device: WO 93/22998 Beschreibung S. 26 - 33; Absorbent Members for Body Fluids: WO 95/26209 Beschreibung S. 36 - 69; Disposable Absorbent Article: WO 98/20916 Beschreibung S. 13 - 24; Improved Composite Absorbent Structures: EP 306262 Beschreibung S. 3 - 14; Body Waste Absorbent Article: WO 99/45973. Diese Referenzen und die Referenzen dort, werden hiermit ausdrücklich in die Offenbarung der Erfindung einbezogen.

Die erfindungsgemäßen sauren Hydrogel-formenden Polymere eignen sich hervorragend als Absorptionsmittel für Wasser und wäßrige Flüssigkeiten, so daß sie vorteilhaft als Wasser zurückhaltendes Mittel im landwirtschaftlichen Gartenbau, als Filtrationshilfsmittel und besonders als saugfähige Komponente in Hygieneartikeln wie Windeln, Tampons oder Damenbinden eingesetzt werden können.

Einlagerung und Fixierung der erfindungsgemäßen hochquellfähiger Hydrogele

Zusätzlich zu den oben beschriebenen hochquellfähigen Hydrogelen liegen in der absorbierenden Zusammensetzung gemäß der vorliegenden Erfindung Kompositionen vor, welche die hochquellfähigen Hydrogele enthalten oder an denen sie fixiert sind. Jede Komposition ist geeignet, die die hochquellfähigen Hydrogele aufnehmen kann und die darüber hinaus in die Absorptionsschicht integriert werden kann. Eine Vielzahl derartiger Zusammensetzungen ist bereits

bekannt und eingehend in der Literatur beschrieben. Eine Komposition zum Einbau der hochquellfähigen Hydrogele kann z. B. eine Fasermatrix sein, die aus einem Cellulosefasergemisch (air-laid web, wet laid web) oder aus synthetischen Polymerfasern (meltblown web, spunbonded web), oder aber aus einem Misch-Faserwerk aus Cellulosefasern und synthetischen Fasern besteht. Mögliche Fasermaterialien werden im sich anschließenden Kapitel detailliert beschrieben. Der Prozeß eines air-laid web ist beispielsweise geschildert in WO 98/28 478. Des weiteren können offenporige Schäume oder ähnliches zum Einbau hochquellfähiger Hydrogele dienen.

Alternativ kann eine derartige Komposition durch Fusion zweier Einzelschichten entstehen, wobei eine oder besser eine Vielzahl an Kammern gebildet werden, die die hochquellfähigen Hydrogele enthalten. Ein derartiges Kammersystem ist detailliert geschildert in EP 0 615 736 A1 S. 7 Zeile 26 ff.

In diesem Fall sollte mindestens eine der beiden Schichten wasserdurchlässig sein. Die zweite Schicht kann entweder wasserdurchlässig oder wasserundurchlässig sein. Als Schichtenmaterial können Tissues oder sonstiges Gewebe, geschlossene oder offenporige Schäume, perforierte Filme, Elastomere oder Gewebe aus Fasermaterial zum Einsatz gelangen. Wenn die absorbierende Zusammensetzung aus einer Komposition von Schichten besteht, sollte das Schichtenmaterial eine Porenstruktur aufweisen, deren Porenabmessungen klein genug sind, um die hochquellfähigen Hydrogelpartikel zurückzuhalten. Obige Beispiele zur Komposition der absorbierenden Zusammensetzung schließen auch Laminate aus mindestens zwei Schichten mit ein, zwischen die die hochquellfähigen Hydrogele eingebaut und fixiert werden.

Generell besteht die Möglichkeit, Hydrogelpartikel innerhalb des Absorbent Cores zur Verbesserung der sog. Dry- und Wet-Integrity zu fixieren. Unter Dry- und Wet-Integrity versteht man die Fähigkeit, hochquellfähige Hydrogele derart in die absorbierende Zusammensetzung einzubauen, daß sie äußeren Krafteinwirkungen sowohl im nassen als auch im trockenen Zustand standhalten und es nicht zu Verschiebungen oder Austritt von hochquellfähigem Polymer kommt. Unter Krafteinwirkungen sind vor allem mechanische Belastungen zu verstehen, wie sie im Bewegungsablauf beim Tragen des Hygieneartikels auftreten, oder aber die Gewichtsbelastung, unter der der Hygieneartikel vor allem im Inkontinenzfall steht. Zur Fixierung gibt es eine Vielzahl an Möglichkeiten, die dem Fachmann bekannt sind. Beispiele wie die Fixierung durch Wärmebehandlung, Zusatz von Adhäsiven, Thermoplasten, Bindermaterialien sind verzeichnet in WO 95/26 209 S. 37 Zeile 36 bis S. 41 Zeile 14. Besagte Passage ist somit Bestandteil dieser Erfindung. Methoden zur Erhöhung der Wet Strength finden sich auch in WO 2000/36216 A1.

Des weiteren kann die absorbierende Zusammensetzung aus einem Trägermaterial, wie z. B. einem Polymerfilm bestehen, auf dem die hochquellfähigen Hydrogelpartikel fixiert werden. Die Fixierung kann sowohl ein- als auch beidseitig vorgenommen werden. Das Trägermaterial kann wasserdurchlässig oder wasserundurchlässig sein.

In obige Kompositionen der absorbierenden Zusammensetzung werden die hochquellfähigen Hydrogele mit einem Gewichtsanteil von 10 bis 100 Gew%, bevorzugt 20 - 100 Gew.-%, mehr bevorzugt 30 - 100 Gew.-%, noch mehr bevorzugt 40 - 100 Gew.-%, besser bevorzugt 50 - 100 Gew.-%, besonders bevorzugt 60 - 100 Gew.-%, insbesondere bevorzugt 70 - 100 Gew.-%, außerordentlich bevorzugt 80 - 100 Gew.-% und am meisten bevorzugt 90 - 100 Gew.-% basierend auf dem Gesamtgewicht der Komposition und der hochquellfähigen Hydrogele eingebaut.

Fasermaterialien der absorbierenden Zusammensetzung

Dem Aufbau der vorliegenden erfindungsgemäßen-absorbierenden Zusammensetzung liegen vielfältige Fasermaterialien zugrunde, die als Fasernetzwerk oder Matrices zum Einsatz gelangen. Mit eingeschlossen von der vorliegenden Erfindung sind sowohl Fasern natürlichen Ursprungs (modifiziert oder unmodifiziert), als auch Synthesefasern.

Einen detaillierten Überblick über Beispiele von Fasern, die in der vorliegenden Erfindung eingesetzt werden können, gibt Patent WO 95/26 209 S. 28 Zeile 9 bis S. 36 Zeile 8. Besagte Passage ist somit Bestandteil dieser Erfindung.

Beispiele für Cellulosefasern schließen jene ein, die üblicherweise bei Absorptionsprodukten verwendet werden, wie Flauschzellstoff und Zellstoff vom Baumwolltyp. Die Materialien (Nadel- oder Laubhölzer), Herstellungsverfahren, wie chemischer Zellstoff, halbchemischer Zellstoff, chemothermischer mechanischer Zellstoff (CTMP) und Bleichverfahren sind nicht besonders eingeschränkt. So finden beispielsweise natürliche Cellulosefasern wie Baumwolle, Flachs, Seide, Wolle, Jute, Ethylcellulose und Celluloseacetat Anwendung.

Geeignete synthetische Fasern werden hergestellt aus Polyvinylchlorid, Polyvinylflourid, Polytetraflourethylen, Polyvinylidenchlorid, Polyacrylverbindungen wie ORLON® , Polyvinylacetat, Polyethylvinylacetat, löslicher oder unlöslicher Polyvinylalkohol. Beispiele für synthetische Fasern schließen thermoplastische Polyolefinfasern, wie Polyethylenfasern (PULPEX® ), Polypropylenfasern und Polyethylen-Polypropylen-Zweikomponentenfasern, Polyesterfasern, wie Polyethylenterephthalatfasern (DACRON® oder KO-DEL® ), Copolyester, Polyvinylacetat, Polyethylvinylacetat, Polyvinylchlorid, Polyvinylidenchlorid, Polyacryle, Polyamide, Copolyamide, Polystyrol und Copolymere der vorstehend genannten Polymere, sowie Zweikomponentenfasern aus Polyethylenterephthalat-Polyethylen-Isophthalat-Copolymer, Polyethylvinylacetat/Polypropylen, Polyethylen/Polyester, Polypropylen/Polyester, Copolyester/Polyester, Polyamidfasern (Nylon), Polyurethanfasern, Polystyrolfasern und Polyacrylnitrilfasern ein. Bevorzugt sind Polyolefinfasern, Polyesterfasern und deren Zweikomponentenfasern. Weiterhin bevorzugt sind in der Wärme haftende Zweikomponentenfasern aus Polyolefin vom Hülle-Kern-Typ und Seite-an-Seite-Typ wegen ihrer ausgezeichneten Formbeständigkeit nach der Flüssigkeitsabsorption.

Die genannten synthetischen Fasern werden bevorzugt in Kombination mit thermoplastischen Fasern eingesetzt. Bei der Hitzebehandlung migrieren letztere teilweise in die Matrix des vorhandenen Fasermaterials und stellen so beim Abkühlen Verbindungsstellen und erneute Versteifungselemente dar. Zusätzlich bedeutet der Zusatz thermoplastischer Fasern eine Erweiterung der vorliegenden Porenabmessungen nach erfolgter Hitzebehandlung. Auf diese Weise ist es möglich, durch kontinuierliches Zudosieren von thermoplastischen Fasern während der Bildung der Absorptionsschicht den Anteil thermoplastischer Fasern zum Deckblatt hin kontinuierlich zu steigern, wodurch ein ebenso kontinuierlicher Anstieg der Porengrößen resultiert. Thermoplastische Fasern können aus einer Vielzahl thermoplastischer Polymere gebildet werden, die einen Schmelzpunkt von weniger als 190°C, bevorzugt zwischen 75°C und 175°C aufweisen. Bei diesen Temperaturen ist noch keine Schädigung der Cellulosefasern zu erwarten.

Längen und Durchmesser der vorstehend beschriebenen Synthesefasern sind nicht besonders eingeschränkt und im allgemeinen kann jede beliebige Faser mit einer Länge von 1 bis 200 mm und einem Durchmesser von 0.1 bis 100 Denier (Gramm pro 9 000 Meter) bevorzugt verwendet werden. Bevorzugte thermoplastische Fasern weisen eine Länge von 3 bis 50 mm, besonders bevorzugte eine Länge von 6 bis 12 mm auf. Der bevorzugte Durchmesser der thermoplastischen Faser liegt zwischen 1,4 und 10 Decitex, besonders bevorzugt zwischen 1,7 und 3,3 Decitex (Gramm pro 10 000 Meter). Die Form ist nicht besonders eingeschränkt und Beispiele schließen gewebeartige, schmale zylinderartige, geschnitten-/spaltgarnartige, stapelfaserartige und endlosfaserartige ein.

Die Fasern in der erfindungsgemäßen absorbierenden Zusammensetzung können hydrophil, hydrophob oder eine Kombination aus beiden sein. Gemäß der Definition von Robert F. Gould in der Publikation "Kontaktwinkel, Benetzbarkeit und Adhäsion", American Chemical Society (1964) wird eine Faser als hydrophil bezeichnet, wenn der Kontaktwinkel zwischen der Flüssigkeit und der Faser (bzw. ihrer Oberfläche) kleiner aus 90º ist, oder wenn die Flüssigkeit zum spontanen Spreiten auf derselben Oberfläche tendiert. Beide Vorgänge sind in aller Regel coexistent. Umgekehrt wird eine Faser als hydrophob bezeichnet, wenn ein Kontaktwinkel von größer als 90° ausgebildet wird und kein Spreiten beobachtet wird.

Bevorzugt wird hydrophiles Fasermaterial eingesetzt. Besonders bevorzugt gelangt Fasermaterial zum Einsatz, das zur Körperseite hin schwach hydrophil und in der Region um die hochquellfähigen Hydrogele am stärksten hydrophil ist. Im Herstellungsprozeß wird durch den Einsatz von Schichten unterschiedlicher Hydrophilie ein Gradient erzeugt, der die auftreffende Flüssigkeit zum Hydrogel kanalisiert, wo letztendlich die Absorption erfolgt.

Geeignete hydrophile Fasern für den Einsatz in der erfindungsgemäßen absorbierenden Zusammensetzung sind beispielsweise Cellulosefasern, modifizierte Cellulosefasern, Rayon, Polyesterfasern wie z. B. Polyethylenterephthalat (DACRON® ), und hydrophiles Nylon (HYDROFIL® ). Geeignete hydrophile Fasern können auch erhalten werden durch Hydrophilierung hydrophober Fasern, wie z.B. die Behandlung thermoplastischer Fasern, erhalten aus Polyolefinen (wie z. B. Polyethylen oder Polypropylen, Polyamide; Polystyrole, Polyurethane usw.) mit Tensiden oder Silica. Aus Kostengründen und aus Gründen der Verfügbarkeit werden jedoch Cellulosefasern bevorzugt.

Die hochquellfähigen Hydrogelpartikel werden in das beschriebene Fasermaterial eingebettet. Dies kann auf vielfältige Weise geschehen, indem man z. B. mit dem Hydrogelmaterial und den Fasern zusammen eine Absorptionsschicht in Form einer Matrix aufbaut, oder durch Einlagerung hochquellfähiger Hydrogele in Schichten aus Fasergemisch, wo sie letztendlich fixiert werden, sei es durch Haftmittel oder Laminierung der Schichten.

Die flüssigkeitsaufnehmende und -verteilende Fasermatrix kann dabei aus synthetischer Faser oder Cellulosefaser oder einem Gemisch aus synthetischer Faser und Cellulosefaser bestehen, wobei das Mischungsverhältnis von (100 bis 0) synthetische Faser : (0 bis 100) Cellulosefaser variieren kann. Die eingesetzten Cellulosefasern können zur Erhöhung der Formbeständigkeit des Hygieneartikels zusätzlich chemisch versteift sein.

Die chemische Versteifung von Cellulosefasern kann auf unterschiedlichen Wegen erreicht werden. Zum einen kann eine Faserversteifung erreicht werden durch Zusatz geeigneter Überzüge / Coatings zum Fasermaterial. Derartige Zusätze schließen beispielsweise Polyamid-Epichlorhydrin-Überzüge (Kymene® 557 H, Hercoles, Inc. Wilmington Delaware, USA), Polyacrylamid- Überzüge (beschrieben in U.S. Patent 3,556,932 oder als Handelsprodukt der Marke Parez® 631 NC, American Cyanamid Co., Stamford, CT, USA), Melamin-Formaldehyd-Überzüge und Polyethylenimin-Überzüge mit ein.

Die chemische Versteifung von Cellulosefasern kann auch durch chemische Reaktion erfolgen. So kann z. B. die Zugabe von geeigneten Vernetzersubstanzen eine Vernetzung bewirken, die innerhalb der Faser stattfindet. Geeignete Vernetzersubstanzen sind typische Substanzen, die zur Vernetzung von Monomeren eingesetzt werden. Mit eingeschlossen, jedoch nicht limitiert darauf, sind $C_2$-$C_8$ Dialdehyde, $C_2$-$C_8$ Monoaldehyde mit saurer Funktionalität, und insbesondere-$C_2$-$C_9$ Polycarbonsäuren. Spezifische Substanzen aus dieser Reihe sind beispielswiese Glutaraldehyd, Glyoxal, Glyoxylsäure, Formaldehyd und Citronensäure. Diese Substanzen reagieren mit mindestens 2 Hydroxyl-Gruppen innerhalb einer einzelnen Cellulosekette oder zwischen zwei benachbarten Celluloseketten innerhalb einer einzelnen Cellulosefaser. Durch die Vernetzung erfolgt eine Verteifung der Fasern, die durch diese Behandlung eine größere Formbeständigkeit verliehen bekommen. Zusätzlich zu ihrem hydrophilen Charakter weisen diese Fasern einheitliche

Kombinationen aus Versteifung und Elastizität auf. Diese physikalische Eigenschaft ermöglicht es, die kapillare Struktur auch bei gleichzeitigem Kontakt mit Flüssigkeit und Kompressionskräften beizubehalten und ein vorzeitiges Kollabieren zu verhindern.

Chemisch vernetzte Cellulosefaseren sind bekannt und in WO 91/11162, U.S. Patent 3,224,926, U.S. Patent 3,440,135, U.S. Patent 3,932,209, U.S. Patent 4,035,147, U.S. Patent 4,822,453, U.S. Patent 4,888,093, U.S. Patent 4,898,642 und U.S. Patent 5,137,537 beschrieben. Die chemische Vernetzung bewirkt eine Versteifung des Fasermaterials, was sich letztendlich in einer verbesserten Formbeständigkeit des gesamten Hygieneartikels widerspiegelt. Die einzelnen Schichten werden durch dem Fachmann bekannte Methoden, wie z. B. Verschmelzen durch Wärmebehandlung, Zugabe von Schmelzklebern, Latexbindern usw. miteinander verbunden.

Herstellungsverfahren der absorbierenden Zusammensetzung

Die absorbierende Zusammensetzung setzt sich zusammen aus Kompositionen, welche saure hochquellfähige Hydrogele enthalten, und den sauren hochquellfähigen Hydrogelen, die in besagten Kompositionen vorliegen oder daran fixiert sind.

Beispiele für Verfahren, mit denen man eine absorbierende Zusammensetzung erhält, die beispielsweise aus einem Trägermaterial bestehen, an den ein- oder beidseitig hochquellfähige Hydrogele fixiert sind, sind bekannt und von der Erfindung mit eingeschlossen, jedoch nicht limitiert darauf.

Beispiele für Verfahren, mit denen man eine absorbierende Zusammensetzng erhält, die beispielsweise aus in ein Fasermaterial-Gemisch aus synthetischen Fasern (a) und Cellulosefasern (b) eingebetteten hochquellfähigen Hydrogelen (c) besteht, wobei das Mischungsverhältnis von (100 bis 0) synthetische Faser : (0 bis 100) Cellulosefaser variieren kann, schließen (1) ein Verfahren, bei dem (a), (b) und (c) gleichzeitig gemischt werden, (2) ein Verfahren, bei dem ein Gemisch aus (a) und (b) in (c) eingemischt wird, (3) ein Verfahren, bei dem ein Gemisch aus (b) und (c) mit (a) gemischt wird, (4) ein Verfahren, bei dem ein Gemisch aus (a) und (c) in (b) eingemischt wird, (5) ein Verfahren, bei dem (b) und (c) gemischt werden und (a) kontinuierlich zudosiert wird, (6) ein Verfahren, bei dem (a) und (c) gemischt werden und (b) kontinuierlich zudosiert wird, und (7) ein Verfahren, bei dem (b) und (c) getrennt in (a) eingemischt werden, ein. Von diesen Beispielen sind die Verfahren (1) und (5) bevorzugt. Die Vorrichtung, die in diesem Verfahren verwendet wird, ist nicht besonders eingeschränkt und es kann eine übliche, dem Fachmann bekannte Vorrichtung verwendet werden.

Die entsprechend erzeugte absorbierende Zusammensetzung kann optional einer Hitzebehandlung unterworfen werden, so daß eine Absorptionsschicht mit hervorragender Formbeständigkeit im feuchten Zustand resultiert. Das Verfahren zur Hitzebehandlung ist nicht besonders eingeschränkt. Beispiele schließen Hitzebehandlung durch Zufuhr heißer Luft oder Infrarotbestrahlung mit ein. Die Temperatur bei der Hitzebehandlung liegt im Bereich 60°C bis 230°C, bevorzugt zwischen 100°C und 200°C, besonders bevorzugt zwischen 100°C und 180°C.

Die Dauer der Hitzebehandlung hängt ab von der Art der synthetischen Faser, deren Menge und der Herstellungsgeschwindigkeit des Hygieneartikels. Generell beträgt die Dauer der Hitzebehandlung zwischen 0.5 Sekunde bis 3 Minuten, bevorzugt 1 Sekunde bis 1 Minute.

Die absorbierende Zusammensetzung wird im allgemeinen beispielsweise mit einer für Flüssigkeit durchlässien Deckschicht und einer für Flüssigkeit undurchlässigen Unterschicht versehen. Wieterhin werden Beinabschlüsse und Klebebänder angebracht und so der Hygieneartikel fertiggestellt. Die Materialien und Arten der durchlässien Deckschicht und undurchlässigen Unterschicht, sowie der Beinabschlüsse und Klebebänder sind dem Fachmann bekannt und nicht besonders eingeschränkt. Beispiele hierfür finden sich in WO 95/26 209.

Experimenteller Teil

Testmethoden

a) Zentrifugenretentionskapazität (CRC Centrifuge Retention Capacity)

Bei dieser Methode wird die freie Quellbarkeit des Hydrogels im Teebeutel bestimmt. Zur Bestimmung der CRC werden 0.2000 $\pm$ 0.0050 g getrocknetes Hydrogel (Kornfraktion 106 - 850 $\mu$m) in einem 60 x 85 mm großen Teebeutel eingewogen, der anschließend verschweißt wird. Der Teebeutel wird für 30 Minuten in einen Überschuss von 0.9 Gew.%igen Kochsalzlösung gegeben (mindestens 0,83 l KochsalzLösung / 1 g Polymerpulver). Anschließend wird der Teebeutel 3 Minuten lang bei 250 g zentrifugiert. Die Bestimmung der Flüssigkeitsmenge geschieht durch Auswägen des zentrifugierten Teebeutels.

b) Absorption unter Druck (AUL Absorbency Under Load) (0.7 psi)

Die Messzelle zur Bestimmung der AUL 0.7 psi stellt ein Plexiglas-Zylinder mit einem Innendurchmesser von 60 mm und einer Höhe von 50 mm dar, der an der Unterseite einen angeklebten Edelstahl-Siebboden mit einer Maschenweite von 36 μm besitzt. Zu der Messzelle gehört weiterhin eine Plastikplatte mit einem Durchmesser von 59 mm und ein Gewicht, welches zusammen mit der Plastikplatte in die Messzelle hineingestellt werden kann. Das Gewicht der Plastikplatte und das Gewicht betragen zusammen 1345 g. Zur Durchführung der Bestimmung der AUL 0.7 psi wird das Gewicht des leeren Plexiglas-Zylinders und der Plastikplatte ermittelt und als Wo notiert. Dann werden 0,900 ± 0.005 g Hydrogel-formendes Polymer (Korngrößenverteilung 150 - 800 μm) in den Plexiglas-Zylinder eingewogen und möglichst gleichmäßig auf dem Edelstahl-Siebboden verteilt. Anschließend wird die Plastikplatte vorsichtig in den Plexiglas-Zylinder hineingelegt und die gesamte Einheit gewogen; das Gewicht wird als $W_a$ notiert. Nun wird das Gewicht auf die Plastikplatte in dem Plexiglas-Zylinder gestellt. In die Mitte der Petrischale mit einem Durchmesser von 200 mm und einer Höhe von 30 mm wird eine keramische Filterplatte mit einem Durchmesser von 120 mm und einer Porosität 0 gelegt und soviel 0.9 Gew.%ige Natriumchloridlösung eingefüllt, dass die Flüssigkeitsoberfläche mit der Filterplattenoberfläche abschließt, ohne dass die Oberfläche der Filterplatte benetzt wird. Anschließend wird ein rundes Filterpapier mit einem Durchmesser von 90 mm und einer Porengröße < 20 μm (S&S 589 Schwarzband von Schleicher & Schüll) auf die keramische Platte gelegt. Der Hydrogel-formendes Polymer enthaltende Plexiglas-Zylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglas-Zylinder entfernt. Der gequollenes Hydrogel enthaltende Plexiglas-Zylinder wird zusammen mit der Plastikplatte ausgewogen und das Gewicht als $W_b$ notiert.

Die Absorption unter Druck (AUL) wird wie folgt berechnet:

$$\text{AUL 0.7 psi [g/g]} = [W_b - W_a] \;/\; [W_a - W_0]$$

c) Saline Flow Conductivity (SFC)

Die Testmethode zur Bestimmung der SFC ist beschrieben in U.S. 5 599 335.

d) Messung des pH-Wertes der Hydrogel-formenden Polymere

100 ml 0,9 Gew.-%ige NaCl-Lösung werden in einem 150 ml-Becherglas mit Hilfe eines Magnetrührers mit moderater Geschwindigkeit gerührt, so dass durch die Rührung keine Luft in die Lösung eingezogen wird. Zu dieser Lösung werden 0,5 ± 0,001 g Hydrogel-formendes Polymer gegeben und 10 Minuten lang gerührt. Nach 10 Minuten wird der pH der Lösung mit Hilfe einer pH-Glaselektrode gemessen, wobei der Wert erst dann abgelesen wird, wenn er stabil ist, frühestens jedoch nach 1 Minute.

e) Ammoniakbestimmung zur Geruchskontrolle

Die Ermittlung des Ammoniak-Stickstoffgehaltes erfolgt kolorimetrisch nach der Nessler-Methode. Aus Harnstoff wird durch Urease Ammoniak abgespalten; es entwickelt sich eine gelbe Farbe proportional zur Ammoniakkonzentration.

5g der verschiedenen Superabsorber-Proben wurden mit 600 ml einer 0.9%igen NaCl and 1.8%igen Harnstofflösung für 20 min getränkt. Die Lösungen wurden abfiltriert und 25 ml der Lösung wurde mit 10 μl Urease Lösung versetzt. Nach 2 Minuten wurde Stickstoff aus Ammoniak nach der Nessler Methode bestimmt.

Beispiele

Beispiel 1a:

In einen mittels Vakuumpumpe auf 980 mbar absolut evakuierten Laborkneter mit einem Arbeitsvolumen von 2 l ( WERNER + PFLEIDERER ) wird eine zuvor separat hergestellte, auf ca. 25 °C abgekühlte und durch Einleiten von Stickstoff inertisierte Monomerlösung eingesaugt. Die Monomerlösung setzt sich wie folgt zusammen: 825,5 g VE-Wasser, 431 g Acrylsäure, 120,68 g NaOH 50%ig, 0,86 g Polyethylenglykol-400-diacrylat (SARTOMER® 344 der Firma CRAY VALLEY) Zur besseren Inertisierung wird der Kneter evakuiert und anschließend mit Stickstoff belüftet. Dieser Vorgang wird 3x wiederholt. Anschließend wird eine Lösung aus 1,2 g Natriumpersulfat, gelöst in 6,8 g VE-Wasser und

nach weiteren 30 Sekunden eine weitere Lösung, bestehend aus 0,024 g Ascorbinsäure, gelöst in 4,8 g VE-Wasser eingesaugt. Es wird mit Stickstoff gespült. Ein auf 75 °C vorgeheizter Mantelheizkreislauf ( Bypass ) wird auf den Knetermantel umgestellt, die Rührerdrehzahl auf 96 UpM erhöht. Nach einsetzender Polymerisation und Erreichen von $T_{max}$ wird der Mantelheizkreislauf wieder auf Bypass umgestellt und 15 Minuten ohne Heizung/Kühlung nachpolymerisiert, anschließend gekühlt, das Produkt ausgetragen. und die entstandenen Gelpartikel auf Blechen mit Drahtnetzboden bei 160°C im Umlufttrockenschrank getrocknet, anschließend gemahlen und gesiebt.

Beispiel 1b:

1200 g des so erhaltenen Produktes der Kornverteilung 105-850 μm wurden in einem Pulvermischaggregat (Loedige-Mischer) mit einer homogenen Lösung, bestehend 20 g Wasser, 0,18g Ethylenglykoldiglycidylether und 0,6 g Sorbitanmonococoat besprüht, in einen vorgewärmten und 2. Lödig-Mischer umgefüllt. Unter konstant gehaltenen Bedingungen bei 150 °C Manteltemperatur und einer Umdrehungszahl von 60 UpM erfolgte die Temperung über eine Zeitraumes von 120 Minuten. Der Mischer wurde entleert, das Produkt auf Raumtemperatur runtergekühlt und bei 105/850 μm abgesiebt, um eventuell entstandene Agglomerate oder entstandene Feinanteile zu entfernen. Die Performancedaten sind der Tabelle 1 zu entnehmen.

Beispiel 1c:

Analog Beispiel 1b wurde verfahren, jedoch wurde nur 70 Minuten getempert und die Nachvernetzungslösung für 1200 g Pulver aus Beispiel 1a setzte sich wie folgt zusammen: 17,58 g Wasser, 9,96 g Propandiol-1,2, 1,2 g Ethylenglykoldiglycidylether und 3,36 g einer 26,8 %igen, wässrigen Aluminiumsulfat-Lösung. Die Performancedaten sind der Tabelle 1 zu entnehmen.

Beispiel 1d:

Analog Beispiel 1b wurde verfahren, jedoch wurde nur 15 Minuten getempert und die Nachvernetzungslösung für 1200 g Pulver aus Beispiel 1a setzte sich wie folgt zusammen: 20,00 g Wasser und 0,90 g Ethylenglykoldiglycidylether. Die Performancedaten sind der Tabelle 1 zu entnehmen.

Beispiel 2:

In einem durch geschäumtes Kunststoffmaterial gut isolierten Polyethylengefäß mit einem Fassungsvermögen von 10 1 werden 3928 g VE-Wasser vorgelegt, 630 g Natriumhydrogencarbonat darin suspendiert und 2000 g Acrylsäure unter Rühren so zufließen lassen, dass kein Überschäumen durch einsetzende $CO_2$-Entwicklung eintritt. Nacheinander werden eine Emulsion aus 1,3 g Sorbitanmonococoat in 100 g VE-Wasser und 6,00 g Allylmethacrylat zugesetzt und die Lösung durch Einleiten von Stickstoff weiter inertisiert. Dann erfolgt die Zugabe des Initiatorsystems, bestehend aus 1,66 g 2,2'-Azobisamidinopropan-dihydrochlorid, gelöst in 20gVE-Wasser, 3,33 g Kaliumperoxodisulfat, gelöst in 150g VE-Wasser sowie 0,3 g Ascorbinsäure, gelöst in 25 g VE-Wasser nacheinander unter Rühren. Die Reaktionslösung wird danach ohne Rühren stehen gelassen, wobei durch die einsetzende Polymerisation, in deren Verlauf die Temperatur auf ca. 90 °C ansteigt, ein festes Gel entsteht. Dieses wird mittels eines Fleischwolfes mechanisch zerkleinert, im Umlufttrockenschrank auf einem Siebgewebe aus VA-Draht bei Temperaturen von 135 °C getrocknet, anschließend gemahlen und gesiebt.

Beispiel 2a:

Produkt aus Beispiel 2 wird analog zu Beispiel 1b nachvernetzt, wobei sich die Nachvernetzungslösung für 1000 g Polymer wie folgt zusammensetzt: 19,26 g Wasser, 19,50 g Propandiol-1,2, 0,25 g 2-Oxazolidinon, 0,49 g Al-Sulfat-Octadecahydrat. Die Performancedaten nach einer Verweilzeit von 30 Minuten sind der Tabelle 1 zu entnehmen.

Beispiel 2b:

Produkt aus Beispiel 2 wird analog zu Beispiel 2a nachvernetzt. Die Performancedaten nach einer Verweilzeit von 60 Minuten sind der Tabelle 1 zu entnehmen.

Beispiel 2c:

Produkt aus Beispiel 2 wird analog zu Beispiel 2a nachvernetzt. Die Performancedaten nach einer Verweilzeit

von 70 Minuten sind der Tabelle 1 zu entnehmen.

Beispiel 3:

In einem durch geschäumtes Kunststoffmaterial gut isolierten Polyethylengefäß mit einem Fassungsvermögen von 10 1 werden 4046 g VE-Wasser vorgelegt, 408 g Lithiumhydroxid-1-Hydrat darin gelöst und 2000 g Acrylsäure unter Rühren langsam zufließen lassen. Nacheinander werden eine Emulsion aus 1,3 g Sorbitanmonococoat in 100 g VE-Wasser und 8,1 g Allylmethacrylat zugesetzt und die Lösung durch Einleiten von Stickstoff weiter inertisiert. Dann erfolgt die Zugabe des Initiatorsystems, bestehend aus 1,66 g 2,2'-Azobisamidinopropan-dihydrochlorid, gelöst in 20gVE-Wasser, 3,33 g Kaliumperoxodisulfat, gelöst in 150g VE-Wasser sowie 0,3 g Ascorbinsäure, gelöst in 25 g VE-Wasser nacheinander unter Rühren. Die Reaktionslösung wird danach ohne Rühren stehen gelassen, wobei durch die einsetzende Polymerisation, in deren Verlauf die Temperatur auf ca. 90 °C ansteigt, ein festes Gel entsteht. Dieses wird mittels eines Fleischwolfes mechanisch zerkleinert. 150 g des so zerkleinerten Gel's werden im Heißluftstrom von 3,11m/sec und 140 °C in einem Metallzylinder von 10 cm Innendurchmesser mit Siebboden aus VA-Draht bei Temperaturen in 25 Minuten getrocknet, anschließend gemahlen und gesiebt.

Beispiel 3a:

Produkt aus Beispiel 3 wird im 20 g Maßstab in einem WARING-Blender (modifizierter Aufsatz für Küchenmixer) mit einer Oberflächennachvernetzungslösung versetzt (aus 2 ml-Spritze aufgespritzt), bestehend aus 3,35 % Wasser / 1,65 % Propandiol-1,2 / 0,03 % Ethylenglykoldiglycidylether und 0,075 % Al-Sulfat (jeweils bezogen auf Polymer) und wird 2 Stunden bei 100 5C in einem Umlufttrockenschrank getempert. Die Performancedaten sind der Tabelle 1 zu entnehmen.

Beispiel 4:

In einem durch geschäumtes Kunststoffmaterial gut isolierten Polyethylengefäß mit einem Fassungsvermögen von 10 l werden 3944 g VE-Wasser vorgelegt, 625 g Natriumhydrogencarbonat darin suspendiert und 1400 g Acrylsäure unter Rühren so zufließen lassen, dass kein Überschäumen durch einsetzende $CO_2$-Entwicklung eintritt. Nacheinander werden dann 600 g 2-Acrylamido-2-methyl-propansulfonsäure sowie eine Emulsion aus 1,3 g Sorbitanmonococoat in 100 g VE-Wasser und 6,5 g Allylmethacrylat zugesetzt und die Lösung durch Einleiten von Stickstoff weiter inertisiert. Dann erfolgt die Zugabe des Initiatorsystems, bestehend aus 1,66 g 2,2'-Azobisamidinopropan-dihydrochlorid, gelöst in 20gVE-Wasser, 3,33 g Kaliumperoxodisulfat, gelöst in 150g VE-Wasser sowie 0,3 g Ascorbinsäure, gelöst in 25 g VE-Wasser nacheinander unter Rühren. Die Reaktionslösung wird danach ohne Rühren stehen gelassen, wobei durch die einsetzende Polymerisation, in deren Verlauf die Temperatur auf ca. 90 °C ansteigt, ein festes Gel entsteht. Dieses wird mittels eines Fleischwolfes mechanisch zerkleinert. 150 g des so zerkleinerten-Gel's werden im Heißluftstrom von 3,1 m/sec und 140 °C in einem Metallzylinder von 10 cm Innendurchmesser mit Siebboden aus VA-Draht bei Temperaturen in 25 Minuten getrocknet, anschließend gemahlen und gesiebt.

Beispiel 4a:

Produkt aus Beispiel 4 wird analog zu Beispiel 3a im 20 g Maßstab in einem WARING-Blender mit einer Oberflächennachvernetzungslösung, bestehend aus 1,95 % Wasser / 1,95 % Propandiol-1,2 / 0,075 % Ethylenglykoldiglycidylether und 0,075 % Al-Sulfat (jeweils bezogen auf Polymer) und wird 2 Stunden bei 140 5C in einem Umlufttrockenschrank getempert. Die Performancedaten sind der Tabelle 1 zu entnehmen.. Die Performancedaten sind der Tabelle 1 zu entnehmen.

Beispiel 5:

Ein Superabsorber, gekennzeichnet durch einen pH von 5-5,5, hergestellt analog Beispiel 7 des EP 0 316 792 B1 wurden im 20 g Maßstab in einem WARING-Blender (modifizierter Aufsatz für Küchenmixer) mit einer Oberflächennachvernetzungslösung versetzt ( aus 2 ml-Spritze aufgespritzt), bestehend aus 2,3 % Wasser / 1,2 % Propandiol-1,2 / 0,2 % Ethylenglykoldiglycidylether (jeweils bezogen auf Polymer) und 1 Stunde bei 140 °C in einem Umlufttrockenschrank getempert. Die Performancedaten sind der Tabelle 1 zu entnehmen.

Beispiel 6

369.97 Acrylsäure (AA) wird mit 2.94g ETMPTA (Ethoxylated-trimethylol-propane-triacrlyate) (entspricht 0.06

mol% bezogen auf AA) versetzt. Diese Lösung wird unter Rühren zu 184.83 g einer 50 Gew.%ige wässrige Lösung von NaOH (45 mol% bezogen auf AA) in 868.17 g deionisiertem Wasser unter Kühlung gegeben. Die Temperatur wird gemessen. Am Anfang wird AA mit ETMPTA schnell zugegeben bis die Temperatur etwa 50°C erreicht. Danach wird AA mit ETMPTA (bis zu etwa 75%) so zugetropft, dass die Temperatur bei etwa 50°C +/- 5°C bleibt. Die restlichen AA mit ETMPA kann schnell zugegeben werden. Die Monomerlösung wird im Eisbad auf 10°C gekühlt und 0.09g Darocur 1173 : Irgacure 651 (2:1 Verhältnis) Photo-Initiatoren werden zugegeben und unter Rühren gelöst. Die Monomerlösung wird im Eisbad wieder auf 10°C gekühlt und 6.832 g 10% Natrium persulphat Lösung (0.07 mol% bezogen auf AA) werden zugegeben. Die Monomerenlösung wird in einen 1.5 L Glasgefäß mit Temperaturkontrolle gegeben. Das Gefäß wird unter eine UV-Emissionlampe (20mWcm$^{-2}$ gemessen am Gefäßboden) gegeben. Eine exotherme Polymerisation wird für 7.5 Minuten gemessen, anschließend kann ein transparentes Gel zur Weiterverarbeitung entnommen werden.

1 Kg des erhaltenen SAP-Gels wurde in einem 2L-Twin sigma blade Mixer für 30 s zur Erhöhung der Oberfläche zerkleinert und mit 100g feinem SAP Pulver (Partikelgröße <106um) für weitere 90 s vermischt. Eine Lösung von 26 g 1%iger Natriummetabisulphit (0.026 mol% bezogen auf AA) wurde dazugegeben und für weitere 90 s vermischt. Anschließend werden 20g 1%iger Span 20 Lösung (Sorbitanmonolaureat) zugegeben (0.02 Gew.% bezogen auf Gel und für 15 s vermischt.

Das zerkleinerte Gel wird in einem Extruder mit 4mm-die Platte zur Erhöhung der Oberfläche extrudiert und anschließend auf einer Metallplatte mit 3mm-Löchern für dir Luftzirkulation bei einer Geldicke von 2-4mm bei 160°C für 45 Min. getrocknet.

Das getrocknete Material wird in einer Hammermühle zerkleinert und die Teilchengröße durch Sieben auf 180 - 710 μm eingestellt.

Die anschließende Oberflächenvernetzung wird mit einer 4 Gew.% einer Lösung enthaltend 1.5% Ethyleneglycol diglycidyl-ether (EGDGE - Nagase Chemicals Japan als Denacol Ex-810), 36.94% Propylenglykol und 61.56% Wasser durchgeführt, wobei für 60 Min. bei 145°C getrocknet und vernetzt wird.

Beispiel 7

Analog Beispiel 6, nur werden 205.37g 50%ig NaOH Lösung in 847.63g Wasser vorgelegt.

Die Performancedaten sind der Tabelle 1 zu entnehmen.

Beispiel 8a

In einem mittels Vakuum auf 50mbar evakuierten Laborkneter mit einem Arbeitsvolumen von 2 1 (Werner + Pfleiderer) wird eine zuvor separat hergestellte, auf ca. 25 °C abgekühlte und durch Einleiten von Stickstoff inertisierte Monomerlösung eingesaugt. Die Monomerlösung setzt sich wie folgt zusammen: 3095,7 g VE-Wasser, 1821,68 g Acrylsäure, 1012.05 g NaOH 50%ig, 8.20 g Polyethylenglycol-400-diacrylat (Sartomer® 344 der Firma CRAY VALLEY), sowie 1,46 g Sorbitanmonococoat. Zur besseren Inertisierung wird der Kneter evakuiert und anschließend mit Stickstoff belüftet. Dieser Vorgang wird 3x wiederholt. Anschließend wird 35,22 g einer wässrigen 15%igen-Natriumpersulfatlösung, 0.18g einer 1%igen wässrigen Wasserstoffperoxidlösung und nach weiteren 30 Sekunden 25,50 g einer 0,5%igen wässrige Ascorbinsäurelösung eingesaugt. Es wird mit Stickstoff gespült. Ein auf 75° C vorgeheizter Mantelheizkreislauf (Bypass) wird auf den Knetermantel umgestellt, die Rührerdrehzahl auf 96 UpM erhöht. Nach einsetzender Polymerisation und Erreichen von $T_{max}$ wird der Mantelheizkreislauf wieder auf Bypass umgestellt und 15 Minuten ohne Heizung/Kühlung nachpolymerisiert, anschließend gekühlt, das Produkt ausgetragen und die entstandenen Gelpartikel auf Blechen mit Drahtnetzböden bei 160 °C im Umlufttrockenschrank getrocknet, anschließend gemahlen und gesiebt.

Beispiel 8b:

1200 g eines so erhaltenen Produktes der Kornverteilung 105 - 850 μm wurden in einem Pulvermischaggregat (Loedige-Mischer) mit einer homogenen Lösung, bestehend aus 39,5g Wasser, 19,7 g Propan-1,2-diol und 0,72 g Ethylenglycoldiglycidylether besprüht und in einem vorgewärmten 2. Loedige-Mischer umgefüllt. Unter konstant gehaltenen Bedingungen bei 150°C Manteltemperatur und einer Umdrehungszahl von 60 UpM erfolgte die Temperung über einen Zeitraum von 120 Minuten. Der Mischer wurde entleert, das Produkt auf Raumtemperatur runtergekühlt und bei 105-850μm abgesiebt, um eventuell entstandene Agglomerate oder entstandene Feinanteile zu entfernen. Die Performancedaten sind der Tabelle 1 zu entnehmen.

Beispiel 9

Superabsorber, wie in Bsp. 1 von WO 00/22018 Seite 14 beschrieben.

Tabelle 1

| Beispiel | pH | SFC x $10^{-7}$ $cm^3s/g$ | CRC g/g | AUL 0.7 psi g/g | $pH_{AI}$ |
|---|---|---|---|---|---|
| 1a | 4,44 | 1 | 23,2 | 5,8 | 74,2 |
| 1b | 4,45 | 14,5 | 21,4 | 14,5 | 91,5 |
| 1c | 4,47 | 13,8 | 20,7 | 18,1 | 98,2 |
| 1d | 4,45 | 12 | 21,9 | 14,7 | 93,3 |
| 2 | 4,39 | 1 | 27,6 | 5,0 | 85,1 |
| 2a | 4,39 | 16 | 25,1 | 13,0 | 99,4 |
| 2b | 4,39 | 24 | 23,3 | 15,8 | 102 |
| 2c | 4,39 | 33 | 22,4 | 18,1 | 105,7 |
| 3 | 4,68 | 1 | 32,4 | 4,9 | 86,5 |
| 3a | 4,69 | 9 | 29,0 | 13,9 | 99 |
| 4 | 4,37 | 2 | 30,0 | 4,8 | 91,5 |
| 4a | 4,39 | 31 | 22,4 | 15,7 | 99,4 |
| Bsp. 7 aus EP 316 792 nicht erfindungsgemäß | 5,4 | ≤ 1 | 42,0 | 6,0 | 76,8 |
| 5 | 5,4 | 17 | 32,9 | 23,0 | 89,4 |
| 6 | 5,1 | 18 | 29,7 | 26,4 | 106,6 |
| 7 | 5,3 | 16 | 30,7 | 26,8 | 97,8 |
| 8 | 5,2 | | 28,2 | 26,1 | 97,7 |

In Tabelle 2 sind die Versuchsergebnisse der Ammoniak-Stickstoffbestimmung der Produkte unterschiedlichen pH-Wertes aus den Beispielen zusammengefasst. Tabelle 2 untermauert die geruchsbindende Wirkung der sauren Superabsorberprodukte.

Tabelle 2

| Beispiel | pH | $N_2$ aus $NH_3$ (Nessler) mg/l | Nessler-Wert |
|---|---|---|---|
| 1c | 4,47 | 1,8 | 20 % |
| 6 | 5,1 | 2,1 | 23 % |
| 7 | 5,3 | 3,9 | 43 % |
| 5 | 5,4 | 5,6 | 62 % |
| 9 | 6,1 | 9,0 | 100 % |

## Patentansprüche

1. Wässrige Flüssigkeiten absorbierende Hydrogel-formende Polymere, wobei die Polymere einen pH-Absorbency-Index $pH_{AI}$, der sich berechnet wie folgt

$$pH_{AI} = \Delta pH \cdot (AUL_{0.7psi} + CRC)$$

mit $\Delta pH$ = 7-pH des entsprechenden Produkts
$AUL_{0.7psi}$ entspricht der Absorption unter Druck bei 0.7psi
CRC entspricht der Zentrifugenretentionskapazität

von mindestens 80 aufweisen und einen pH-Wert von kleiner gleich 5.7 aufweisen.

2. Wässrige Flüssigkeiten absorbierende Hydrogel-formende Polymere gemäß Anspruch 1, die einen $pH_{AI}$ von mindestens 90 aufweisen.

3. Wässrige Flüssigkeiten absorbierende Hydrogel-formende Polymere gemäß Anspruch 1, die einen $pH_{AI}$ von mindestens 100 aufweisen.

4. Wässrige Flüssigkeiten absorbierende Hydrogel-formende Polymere gemäß einem der Ansprüche 1 bis 3, wobei die Polymere einen pH-Wert von 4 bis 5,5 aufweisen.

5. Wässrige Flüssigkeiten absorbierende Hydrogel-formende Polymere gemäß Anspruch 4, wobei die Polymere einen pH-Wert von 4,4 bis 4,6 oder 5,1 bis 5,3 aufweisen.

6. Wässrige Flüssigkeiten absorbierende Hydrogel-formende Polymere gemäß einem der Ansprüche 1 bis 5, wobei die Polymere einen Nessler-Wert von kleiner 60% aufweisen.

7. Wässrige Flüssigkeiten absorbierende Hydrogel-formende Polymere gemäß einem der Ansprüche 1 bis 6, wobei die Polymere einen CRC größer 15 g/g aufweisen.

8. Wässrige Flüssigkeiten absorbierende Hydrogel-formende Polymere gemäß einem der Ansprüche 1 bis 7, wobei die Polymere einen AUL-0.7psi größer 13 g/g aufweisen.

9. Wässrige Flüssigkeiten absorbierende Hydrogel-formende Polymere gemäß einem der Ansprüche 1 bis 8, wobei die Polymere aus einem base Polymer mit einem pH-Wert von kleiner gleich 5,7 durch Oberflächennachvernetzung erhältlich sind.

10. Wässrige Flüssigkeiten absorbierende Hydrogel-formende Polymere gemäß Anspruch 9, wobei die Polymere aus einem base Polymer mit einem pH-Wert von 4 bis 5,5 erhältlich sind.

11. Wässrige Flüssigkeiten absorbierende Hydrogel-formende Polymere gemäß einem der Ansprüche 1 bis 10, wobei das Polymer ein (Co) Polymer der Acrylsäure ist, das teilneutralisiert als Alkali-, Erdalkali-, Ammonium- oder Aminsalz vorliegt.

12. Wässrige Flüssigkeiten absorbierende Hydrogel-formende Polymere gemäß einem der Ansprüche 1 bis 11, wobei das Polymer antimikrobielle Eigenschaften aufweist.

13. Verwendung von wässrigen Flüssigkeiten absorbierenden Hydrogel-formenden Polymeren gemäß der Ansprüche 1 bis 12 zur Herstellung von Saugkörpern, die wässrige Flüssigkeiten temporär oder dauerhaft binden.

14. Verfahren zur Herstellung von wässrige Flüssigkeiten absorbierende Hydrogel-formenden Polymeren gemäß einem der Ansprüche 1 bis 12, wobei ein base Polymer mit einem einen pH-Wert von kleiner gleich 5,7 oberflächennachvernetzt wird.

15. Wässrige Flüssigkeiten absorbierende Hydrogel-formende Polymere gemäß einem der Ansprüche 1 bis 12, hergestellt durch Polymerisation teilneutralisierter Acrylsäure mit einem Vernetzungsmittel, wobei

(i) die Teilneutralisierung bewirkt werden kann durch NaOH 50 %ig: 20-29 Mol-% bezogen auf Acrylsäure, eine entsprechende Neutralisation kann auch mit anderen Neutralisationsmitteln erreicht werden,
die Vernetzung bewirkt werden kann durch Polyethylenglykol-400-diacrylat: 0,005-1,0 Gew-.% bezogen auf Acrylsäure;
oder einen anderen Vernetzer, der den gleichen Vernetzungsgrad ergibt,
oder
(ii)die Teilneutralisation bewirkt werden kann durch $NaHCO_3$: 23-38 Gew.-% bezogen auf Acrylsäure, eine entsprechende Neutralisation kann auch mit anderen Neutralisationsmitteln erreicht werden,
die Vernetzung bewirkt werden kann durch Allylmethacrylat: 0,005-1,0 Gew.-% bezogen auf Acrylsäure;
oder einen anderen Vernetzer der den gleichen Vernetzungsgrad ergibt,
oder

(iii) die Teilneutralisation bewirkt werden kann durch LiOH x $H_2O$: 15-30 Gew.-% bezogen auf Acrylsäure, eine entsprechende Neutralisation kann auch mit anderen Neutralisationsmitteln erreicht werden,
die Vernetzung bewirkt werden kann durch Allylmethacrylat: 0,005-1,0 Gew.-% bezogen auf Acrylsäure ;
oder einen anderen Vernetzer, der den gleichen Vernetzungsgrad ergibt,
oder
(iv) die Teilneutralisation bewirkt werden kann durch $NaHCO_3$: 35-55 Gew.-% bezogen auf Acrylsäure, eine entsprechende Neutralisation kann auch mit anderen Neutralisationsmitteln erreicht werden, wenn
2-Acrylamido-2-methyl-propansulfonsäure zu 30-55 Gew.-% bezogen auf Acrylsäure, zusätzlich zu Acrylsäure vorliegt,
die Vernetzung bewirkt werden kann durch Allylmethacrylat: 0,005-1,0 Gew.-% bezogen auf Acrylsäure,
oder einen anderen Vernetzer, der den gleichen Vernetzungsgrad ergibt,
und Trocknung.

**16.** Wässrige Flüssigkeiten absorbierendes Hydrogel-formendes Polymer gemäß Anspruch 15, wobei

(i) die Teilneutralisierung bewirkt werden kann durch NaOH 50 %ig: 22-28 Mol-%, bezogen auf Acrylsäure, eine entsprechende Neutralisation kann auch mit anderen Neutralisationsmitteln erreicht werden,
die Vernetzung bewirkt werden kann durch Polyethylenglykol-400-diacrylat: 0,1-0,4 Gew.-%, bezogen auf Acrylsäure;
oder einen anderen Vernetzer, der den gleichen Vernetzungsgrad ergibt,
oder
(ii)die Teilneutralisation bewirkt werden kann durch $NaHCO_3$ : 27 bis 35 Gew.-%, bezogen auf Acrylsäure, eine entsprechende Neutralisation kann auch mit anderen Neutralisationsmitteln erreicht werden,
die Vernetzung bewirkt werden kann durch Allylmethacrylat: 0,1-0,5 Gew.-%, bezogen auf Acrylsäure;
oder einen anderen Vernetzer der den gleichen Vernetzungsgrad ergibt,
oder
(iii) die Teilneutralisation bewirkt werden kann durch LiOH x $H_2O$: 17 bis 25 Gew.-%, bezogen auf Acrylsäure, eine entsprechende Neutralisation kann auch mit anderen Neutralisationsmitteln erreicht werden,
die Vernetzung bewirkt werden kann durch Allylmethacrylat: 0,1-0,6 Gew.-%, bezogen auf Acrylsäure;
oder einen anderen Vernetzer, der den gleichen Vernetzungsgrad ergibt,
oder
(iv)die Teilneutralisation bewirkt werden kann durch $NaHCO_3$: 40 bis 50 Gew.-%, bezogen auf Acrylsäure, eine entsprechende Neutralisation kann auch mit anderen Neutralisationsmitteln erreicht werden, wenn
2-Acrylamido-2-methyl-propansulfonsäure zu 35 bis 50 Gew.-%, bezogen auf Acrylsäure zusätzlich zu Acrylsäure vorliegt,
die Vernetzung bewirkt werden kann durch Allylmethacrylat: 0,1-0,6 Gew.-%, bezogen auf Acrylsäure,
oder einen anderen Vernetzer, der den gleichen Vernetzungsgrad ergibt.

**17.** Wässrige Flüssigkeiten absorbierendes Hydrogel-formendes Polymer gemäß Anspruch 15, wobei

(i) die Teilneutralisierung bewirkt werden kann durch NaOH 50 %ig: 23 bis 27 Mol-%, bezogen auf Acrylsäure, eine entsprechende Neutralisation kann auch mit anderen Neutralisationsmitteln erreicht werden,
die Vernetzung bewirkt werden kann durch Polyethylenglykol-400-diacrylat: 0,15-0,25 Gew.-%, bezogen auf Acrylsäure;
oder einen anderen Vernetzer, der den gleichen Vernetzungsgrad ergibt,
oder
(ii) die Teilneutralisation bewirkt werden kann durch $NaHCO_3$: 30 bis 33 Gew.-%, bezogen auf Acrylsäure, eine entsprechende Neutralisation kann auch mit anderen Neutralisationsmitteln erreicht werden,
die Vernetzung bewirkt werden kann durch Allylmethacrylat: 0,2-0,4 Gew.-%, bezogen auf Acrylsäure;
oder einen anderen Vernetzer der den gleichen Vernetzungsgrad ergibt,
oder
(iii) die Teilneutralisation bewirkt werden kann durch LiOH x $H_2O$: 19 bis 23 Gew.-%, bezogen auf Acrylsäure, eine entsprechende Neutralisation kann auch mit anderen Neutralisationsmitteln erreicht werden,
die Vernetzung bewirkt werden kann durch Allylmethacrylat: 0,3-0,5 Gew.-%, bezogen auf Acrylsäure;
oder einen anderen Vernetzer, der den gleichen Vernetzungsgrad ergibt,
oder
(iv)die Teilneutralisation bewirkt werden kann durch $NaHCO_3$: 43 bis 46 Gew.-%, bezogen auf Acrylsäure, eine entsprechende Neutralisation kann auch mit anderen Neutralisationsmitteln erreicht werden, wenn

2-Acrylamido-2-methyl-propansulfonsäure zu 41 bis 45 Gew.-%, bezogen auf Acrylsäure zusätzlich zu Acrylsäure vorliegt,
die Vernetzung bewirkt werden kann durch Allylmethacrylat: 0,3-0,5 Gew.-%, bezogen auf Acrylsäure,
oder einen anderen Vernetzer, der den gleichen Vernetzungsgrad ergibt.

**18.** Hygieneartikel, umfassend

(A) eine obere flüssigkeitsdurchlässige Abdeckung
(B) eine untere flüssigkeitsundurchlässige Schicht
(C) einen zwischen (A) und (B) befindlichen Kern, enthaltend 10 - 100 Gew.-% des Hydrogel-formenden Polymer gemäß einem der Ansprüche 1 bis 12 oder 15 bis 17 0 - 90 Gew.-% hydrophiles Fasermaterial
(D) gegebenenfalls eine sich unmittelbar oberhalb und unterhalb des Kerns (C) sich befindende Tissueschicht und
(E) gegebenenfalls eine zwischen (A) und (C) sich befindende Aufnahmeschicht.

## Claims

**1.** Hydrogel forming polymers capable of absorbing aqueous fluids and having a pH absorbency index $pH_{AI}$, which is calculated as follows:

$$pH_{AI} = \Delta pH \cdot (AUL_{0.7psi} + CRC)$$

where $\Delta$pH = 7 - pH of product
$AUL_{0.7psi}$ is the absorbency under load at 0.7 psi
CRC is the centrifuge retention capacity
of at least 80 and having a pH of not more than 5.7.

**2.** Hydrogel forming polymers according to claim 1 that have a $pH_{AI}$ of at least 90.

**3.** Hydrogel forming polymers according to claim 1 that have a $pH_{AI}$ of at least 100.

**4.** Hydrogel forming polymers according to any of claims 1 to 3 wherein the polymers have a pH in the range from 4 to 5.5.

**5.** Hydrogel forming polymers according to claim 4 wherein the polymers have a pH in the range from 4.4 to 4.6 or from 5.1 to 5.3.

**6.** Hydrogel forming polymers according to any of claims 1 to 5 wherein the polymers have a Nessler value of less than 60%.

**7.** Hydrogel forming polymers according to any of claims 1 to 6 wherein the polymers have a CRC greater than 15 g/g.

**8.** Hydrogel forming polymers according to any of claims 1 to 7 wherein the polymers have an AUL-0.7 psi greater than 13 g/g.

**9.** Hydrogel forming polymers according to any of claims 1 to 8 wherein the polymers are obtainable from a base polymer having a pH of not more than 5.7 by surface postcrosslinking.

**10.** Hydrogel forming polymers according to claim 9 wherein the polymers are obtainable from a base polymer having a pH in the range from 4 to 5.5.

**11.** Hydrogel forming polymers according to any of claims 1 to 10 wherein the polymer is an acrylic acid (co)polymer partially neutralized to an alkali metal, alkaline earth metal, ammonium or amine salt.

**12.** Hydrogel forming polymers according to any of claims 1 to 11 wherein the polymer has antimicrobial properties.

**13.** The use of the hydrogel forming polymers according to any of claims 1 to 12 for preparing absorbent articles capable of permanently or temporarily binding aqueous fluids.

**14.** A process for preparing the hydrogel forming polymers according to any of claims 1 to 12, which comprises surface postcrosslinking a base polymer having a pH of not more than 5.7.

**15.** Hydrogel forming polymers capable of absorbing aqueous fluids, and according to any of claims 1 to 12, prepared by polymerization of partially neutralized acrylic acid with a crosslinking agent, wherein

(i) the partial neutralization can be effected using NaOH 50%: 20-29 mol% based on acrylic acid, a corresponding neutralization can also be achieved with other neutralizing agents,
the crosslinking can be effected using polyethylene glycol 400 diacrylate: 0.005-1.0% by weight based on acrylic acid;
or some other crosslinker which produces the same degree of crosslinking,
or
(ii)the partial neutralization can be effected using $NaHCO_3$: 23-38% by weight based on acrylic acid, a corresponding neutralization can also be achieved with other neutralizing agents,
the crosslinking can be effected using allyl methacrylate: 0.005-1.0% by weight based on acrylic acid;
or some other crosslinker which produces the same degree of crosslinking,
or
(iii) the partial neutralization can be effected using LiOH x $H_2O$: 15-30% by weight based on acrylic acid, a corresponding neutralization can also be achieved with other neutralizing agents,
the crosslinking can be effected using allyl methacrylate: 0.005-1.0% by weight based on acrylic acid;
or some other crosslinker which produces the same degree of crosslinking,
or
(iv)the partial neutralization can be effected using $NaHCO_3$ : 35-55% by weight based on acrylic acid, a corresponding neutralization can also be achieved with other neutralizing agents when
2-acrylamido-2-methylpropanesulfonic acid is present at 30-55% by weight based on acrylic acid, additionally to acrylic acid,
the crosslinking can be effected using allyl methacrylate: 0.005-1.0% by weight based on acrylic acid,
or some other crosslinker which produces the same degree of crosslinking,
and drying.

**16.** Hydrogel forming polymer capable of absorbing aqueous fluids and according to claim 15, wherein

(i) the partial neutralization can be effected using NaOH 50%: 22-28 mol% based on acrylic acid, a corresponding neutralization can also be achieved with other neutralizing agents,
the crosslinking can be effected using polyethylene glycol 400 diacrylate: 0.1-0.4% by weight based on acrylic acid;
or some other crosslinker which produces the same degree of crosslinking,
or
(ii) the partial neutralization can be effected using $NaHCO_3$: 27% to 35% by weight based on acrylic acid, a corresponding neutralization can also be achieved with other neutralizing agents,
the crosslinking can be effected using allyl methacrylate: 0.1-0.5% by weight based on acrylic acid;
or some other crosslinker which produces the same degree of crosslinking,
or
(iii) the partial neutralization can be effected using LiOH $\times$ $H_2O$: 17% to 25% by weight based on acrylic acid, a corresponding neutralization can also be achieved with other neutralizing agents,
the crosslinking can be effected using allyl methacrylate: 0.1-0.6% by weight based on acrylic acid;
or some other crosslinker which produces the same degree of crosslinking,
or
(iv) the partial neutralization can be effected using $NaHCO_3$: 40% to 50% by weight based on acrylic acid, a corresponding neutralization can also be achieved with other neutralizing agents when
2-acrylamido-2-methylpropanesulfonic acid is present at 35% to 50% by weight based on acrylic acid, additionally to acrylic acid,
the crosslinking can be effected using allyl methacrylate: 0.1-0.6% by weight based on acrylic acid,
or some other crosslinker which produces the same degree of crosslinking.

**17.** Hydrogel forming polymer capable of absorbing aqueous fluids and according to claim 15, wherein

(i) the partial neutralization can be effected using NaOH 50%: 23-27 mol% based on acrylic acid, a corresponding neutralization can also be achieved with other neutralizing agents,
the crosslinking can be effected using polyethylene glycol 400 diacrylate: 0.15-0.25% by weight based on acrylic acid;
or some other crosslinker which produces the same degree of crosslinking,
or
(ii)the partial neutralization can be effected using $NaHCO_3$: 30% to 33% by weight based on acrylic acid, a corresponding neutralization can also be achieved with other neutralizing agents,
the crosslinking can be effected using allyl methacrylate: 0.2-0.4% by weight based on acrylic acid;
or some other crosslinker which produces the same degree of crosslinking,
or
(iii) the partial neutralization can be effected using $LiOH \times H_2O$: 19% to 23% by weight based on acrylic acid, a corresponding neutralization can also be achieved with other neutralizing agents,
the crosslinking can be effected using allyl methacrylate: 0.3-0.5% by weight based on acrylic acid;
or some other crosslinker which produces the same degree of crosslinking,
or
(iv) the partial neutralization can be effected using $NaHCO_3$ : 43% to 46% by weight based on acrylic acid, a corresponding neutralization can also be achieved with other neutralizing agents when
2-acrylamido-2-methylpropanesulfonic acid is present at 41% to 45% by weight based on acrylic acid, additionally to acrylic acid,
the crosslinking can be effected using allyl methacrylate: 0.3-0.5% by weight based on acrylic acid,
or some other crosslinker which produces the same degree of crosslinking.

**18.** A hygiene article comprising

(A) a liquid pervious topsheet
(B) a liquid impervious backsheet
(C) a core positioned between (A) and (B) and comprising 10-100% by weight of the hydrogel forming polymer according to any of claims 1 to 12 or 15 to 17 0-90% by weight of hydrophilic fiber material
(D) if appropriate a tissue layer positioned directly above and below said core (C) and
(E) if appropriate an acquisition layer positioned between (A) and (C).

**Revendications**

**1.** Polymères formateurs d'hydrogels absorbant les liquides aqueux, dans lesquels les polymères présentent un pH en fonction de l'indice d'absorption $pH_{AI}$, que l'on calcule de la manière suivante :

$$pH_{AI} = \Delta pH \cdot (AUL_{0.7psi} + CRC)$$

avec
$\Delta pH$ = 7 - pH du produit correspondant,
$AUL_{0,7psi}$ qui correspond à l'absorption sous pression de $4{,}83.10^3$ Pa (0,7 psi),
CRC qui correspond à la capacité de rétention centrifuge d'au moins 80, et une valeur de pH inférieure ou égale à 5,7.

**2.** Polymères formateurs d'hydrogels absorbant les liquides aqueux selon la revendication 1, qui présentent un $PH_{AI}$ d'au moins 90.

**3.** Polymères formateurs d'hydrogels absorbant les liquides aqueux selon la revendication 1, qui présentent un $pH_{AI}$ d'au moins 100.

**4.** Polymères formateurs d'hydrogels absorbant les liquides aqueux selon l'une quelconque des revendications 1 à 3, dans lesquels les polymères présentent une valeur de pH de 4 à 5,5.

**5.** Polymères formateurs d'hydrogels absorbant les liquides aqueux selon la revendication 4, dans lesquels les polymères présentent une valeur de pH de 4,4 à 4,6 ou de 5,1 à 5,3.

**6.** Polymères formateurs d'hydrogels absorbant les liquides aqueux selon l'une quelconque des revendications 1 à 5, dans lesquels les polymères présentent une valeur de Nessler inférieure à 60%.

**7.** Polymères formateurs d'hydrogels absorbant les liquides aqueux selon l'une quelconque des revendications 1 à 6, dans lesquels les polymères présentent un CRC supérieur à 15 g/g.

**8.** Polymères formateurs d'hydrogels absorbant les liquides aqueux selon l'une quelconque des revendications 1 à 7, dans lesquels les polymères présentent un $AUL_{0,7psi}$ supérieur à 13 g/g.

**9.** Polymères formateurs d'hydrogels absorbant les liquides aqueux selon l'une quelconque des revendications 1 à 8, dans lesquels les polymères peuvent être obtenus à partir d'un polymère de base ayant une valeur de pH inférieure ou égale à 5,7 par post-réticulation de surface.

**10.** Polymères formateurs d'hydrogels absorbant les liquides aqueux selon la revendication 9, dans lesquels les polymères peuvent être obtenus à partir d'un polymère de base ayant une valeur de pH de 4 à 5,5.

**11.** Polymères formateurs d'hydrogels absorbant les liquides aqueux selon l'une quelconque des revendications 1 à 10, dans lesquels le polymère est un (co) polymère d'acide acrylique qui se présente sous la forme partiellement neutralisée d'un sel de métal alcalin, d'un sel de métal alcalinoterreux, d'un sel d'ammonium ou d'un sel d'amine.

**12.** Polymères formateurs d'hydrogels absorbant les liquides aqueux selon l'une quelconque des revendications 1 à 11, dans lesquels le polymère présente des propriétés antimicrobiennes.

**13.** Utilisation de polymères formateurs d'hydrogels absorbant les liquides aqueux selon les revendications 1 à 12 pour fabriquer des corps absorbants qui lient des liquides aqueux temporairement ou durablement.

**14.** Procédé de fabrication de polymères formateurs d'hydrogels absorbant les liquides aqueux selon l'une quelconque des revendications 1 à 12, dans lequel un polymère de base ayant une valeur de pH inférieure ou égale à 5,7 est post-réticulé en surface.

**15.** Polymères formateurs d'hydrogels absorbant les liquides aqueux selon l'une quelconque des revendications 1 à 12, fabriqués par polymérisation d'acide acrylique partiellement neutralisé avec un agent de réticulation, dans lesquels :

(i) on peut provoquer la neutralisation partielle par du NaOH à 50% à raison de 20 à 29% en mole par rapport à l'acide acrylique, une neutralisation correspondante peut également être assurée avec d'autres agents de neutralisation,
on peut provoquer la réticulation par du diacrylate de polyéthylèneglycol 400 à raison de 0,005 à 1,0% en poids par rapport à l'acide acrylique;
ou un autre agent de réticulation, qui assure le même degré de réticulation,
ou
(ii) on peut provoquer la neutralisation partielle par du $NaHCO_3$ à raison de 23 à 38% en poids par rapport à l'acide acrylique, une neutralisation correspondante peut également être assurée avec d'autres agents de neutralisation;
on peut provoquer la réticulation par du méthacrylate d'allyle à raison de 0,005 à 1,0% en poids par rapport à l'acide acrylique;
ou un autre agent de réticulation qui assure le même degré de réticulation,
ou
(iii) on peut provoquer la neutralisation partielle par du LiOH x $H_2O$ à raison de 15 à 30% en poids par rapport à l'acide acrylique, une neutralisation correspondante peut également être assurée avec d'autres agents de neutralisation;
on peut provoquer la réticulation par du méthacrylate d'allyle à raison de 0,005 à 1,0% en poids par rapport à l'acide acrylique;
ou un autre agent de réticulation qui assure le même degré de réticulation,
ou

(iv) on peut provoquer la neutralisation partielle par du $NaHCO_3$ à raison de 35 à 55% en poids par rapport à l'acide acrylique, une neutralisation correspondante peut également être assurée avec d'autres agents de neutralisation, si
de l'acide 2-acrylamido-2-méthylpropane-sulfonique est présent à raison de 30 à 55% en poids par rapport à l'acide acrylique, en plus de l'acide acrylique,
on peut provoquer la réticulation par du méthacrylate d'allyle à raison de 0,005 à 1,0% en poids par rapport à l'acide acrylique;

ou un autre agent de réticulation qui assure le même degré de réticulation,
et séchage.

**16.** Polymère formateur d'hydrogel absorbant les liquides aqueux selon la revendication 15, dans lequel

(i) on peut provoquer la neutralisation partielle par du NaOH à 50% à raison de 22 à 28% en mole par rapport à l'acide acrylique, une neutralisation correspondante peut également être assurée avec d'autres agents de neutralisation,
on peut provoquer la réticulation par du diacrylate de polyéthylèneglycol 400 à raison de 0,1 à 0,4 % en poids par rapport à l'acide acrylique;
ou un autre agent de réticulation qui assure le même degré de réticulation,
ou
(ii) on peut provoquer la neutralisation partielle par du $NaHCO_3$ à raison de 27 à 35 % en poids par rapport à l'acide acrylique, une neutralisation correspondante peut également être assurée avec d'autres agents de neutralisation,
on peut provoquer la réticulation par du méthacrylate d'allyle à raison de 0,1 à 0,5% en poids par rapport à l'acide acrylique;
ou un autre agent de réticulation qui assure le même degré de réticulation,
ou
on peut provoquer la neutralisation partielle par du LiOH x $H_2O$ à raison de 17 à 25% en poids par rapport à l'acide acrylique, une neutralisation correspondante peut également être assurée avec d'autres agents de neutralisation,
on peut provoquer la réticulation par du méthacrylate d'allyle à raison de 0,1 à 0,6% en poids par rapport à l'acide acrylique;
ou un autre agent de réticulation qui assure le même degré de réticulation,
ou
(iv) on peut provoquer la neutralisation partielle par du $NaHCO_3$ à raison de 40 à 50% en poids par rapport à l'acide acrylique, une neutralisation correspondante peut également être assurée avec d'autres agents de neutralisation, si
de l'acide 2-acrylamido-2-méthylpropane-sulfonique est présent à raison de 35 à 50% en poids par rapport à l'acide acrylique, en plus de l'acide acrylique,
on peut provoquer la réticulation par du méthacrylate d'allyle à raison de 0,1 à 0,6% en poids par rapport à l'acide acrylique;

ou un autre agent de réticulation qui assure le même degré de réticulation.

**17.** Polymère formateur d'hydrogel absorbant les liquides aqueux selon la revendication 15, dans lequel

(i) on peut provoquer la neutralisation partielle par du NaOH à 50% à raison de 23 à 27% en mole par rapport à l'acide acrylique, une neutralisation correspondante peut également être assurée avec d'autres agents de neutralisation,
on peut provoquer la réticulation par du diacrylate de polyéthylèneglycol 400 à raison de 0,15 à 0,25% en poids par rapport à l'acide acrylique;
ou un autre agent de réticulation qui assure le même degré de réticulation,
ou
(ii) on peut provoquer la neutralisation partielle par du $NaHCO_3$ à raison de 30 à 33% en poids par rapport à l'acide acrylique, une neutralisation correspondante peut également être assurée avec d'autres agents de neutralisation,
on peut provoquer la réticulation par du méthacrylate d'allyle à raison de 0,2 à 0,4% en poids par rapport à l'acide acrylique;

ou un autre agent de réticulation qui assure le même degré de réticulation,
ou
(iii) on peut provoquer la neutralisation partielle par du LiOH x $H_2O$ à raison de 19 à 23% en poids par rapport à l'acide acrylique, une neutralisation correspondante peut également être assurée avec d'autres agents de neutralisation,
on peut provoquer la réticulation par du méthacrylate d'allyle à raison de 0,3 à 0,5% en poids par rapport à l'acide acrylique;
ou un autre agent de réticulation qui assure le même degré de réticulation,
ou
(iv) on peut provoquer la neutralisation partielle par du $NaHCO_3$ à raison de 43 à 46% en poids par rapport à l'acide acrylique, une neutralisation correspondante peut également être assurée avec d'autres agents de neutralisation, si
de l'acide 2-acrylamido-2-méthylpropane-sulfonique est présent à raison de 41 à 45% en poids par rapport à l'acide acrylique, en plus de l'acide acrylique,
on peut provoquer la réticulation par du méthacrylate d'allyle à raison de 0,3 à 0,5% en poids par rapport à l'acide acrylique;

ou un autre agent de réticulation qui assure le même degré de réticulation.

**18.** Article hygiénique comprenant :

(A) un revêtement supérieur perméable aux liquides,
(B) une couche inférieure imperméable aux liquides,
(C) un noyau se trouvant entre (A) et (B) et contenant 10 à 100% en poids du polymère formateur d'hydrogel selon l'une quelconque des revendications 1 à 12 ou 15 à 17, 0 à 90% en poids d'un matériau hydrophile fibreux,
(D) éventuellement une couche de tissu se trouvant directement au-dessus et au-dessous du noyau (C) et
(E) éventuellement une couche d'absorption se trouvant entre (A) et (C).